(19) Europäisches Patentamt
European Patent Office
Office européen des brevets

(11) EP 1 832 595 B1

(12) EUROPÄISCHE PATENTSCHRIFT

(45) Veröffentlichungstag und Bekanntmachung des Hinweises auf die Patenterteilung:
**15.07.2009 Patentblatt 2009/29**

(51) Int Cl.:
***C07F 9/30*** *(2006.01)* ***C08K 5/5313*** *(2006.01)*

(21) Anmeldenummer: **07004224.7**

(22) Anmeldetag: **01.03.2007**

(54) **Mischungen aus Mono-Carboxylfunktionalisierten Dialkylphosphinsäure- Salzen und weiteren Komponenten, ein Verfahren zu ihrer Herstellung und ihre Verwendung**

Compounds of mono-carboxyl functionalised dialkylphosphine acid salts and other components, a method for their manufacture and their application

Mélanges en sels d'acides dialkyl phosphiniques fonctionnalisés par monocarboxyle et composants complémentaires, un procédé destiné à sa fabrication et à son utilisation

(84) Benannte Vertragsstaaten:
**AT BE CH DE ES FR GB IT LI NL**

(30) Priorität: **07.03.2006 DE 102006010352**

(43) Veröffentlichungstag der Anmeldung:
**12.09.2007 Patentblatt 2007/37**

(73) Patentinhaber: **Clariant Finance (BVI) Limited**
**Road Town, Tortola (VG)**

(72) Erfinder:
- **Maas, Wiebke, Dr.**
  **50354 Hürth (DE)**
- **Krause, Werner, Dr.**
  **50354 Hürth (DE)**
- **Bauer, Harald, Dr.**
  **50170 Kerpen (DE)**

(74) Vertreter: **Jacobi, Carola et al**
**Clariant Produkte (Deutschland) GmbH**
**Group Intellectual Property**
**Am Unisys-Park 1**
**65843 Sulzbach am Taunus (DE)**

(56) Entgegenhaltungen:
**EP-A- 1 544 205** **WO-A-20/07007663**
**US-B1- 6 753 363**

- **GROBELNY D ET AL: "BINDING ENERGETICS OF PHOSPHORUS-CONTAINING INHIBITORS OF THERMOLYSIN" BIOCHEMISTRY, AMERICAN CHEMICAL SOCIETY. EASTON, PA, US, Bd. 28, Nr. 12, 1. Juni 1989 (1989-06-01), Seiten 4948-4951, XP000009206 ISSN: 0006-2960**
- **DATABASE CA [Online] CHEMICAL ABSTRACTS SERVICE, COLUMBUS, OHIO, US; KHAIRULLIN, V. K. ET AL: "Reaction of chlorides of acids of trivalent phosphorus with conjugated systems. I. Reaction of ethylphosphonous dichloride with .alpha.,.beta.-unsaturated acids" XP002433886 gefunden im STN Database accession no. 1966:84668 & ZHURNAL OBSHCHEI KHIMII , 36(2), 289-96 CODEN: ZOKHA4; ISSN: 0044-460X, 1966, XP008078816**
- **DATABASE CA [Online] CHEMICAL ABSTRACTS SERVICE, COLUMBUS, OHIO, US; HARASHINA, HATSUHIKO: "Fire-resistant resin composition with good tracking resistance" XP002433887 gefunden im STN Database accession no. 2007: 61167 & WO 2007/007663 A1 (POLYPLASTICS CO., LTD., JAPAN) 18. Januar 2007 (2007-01-18)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Mischungen aus Mono-Carboxylfunktionalisierten Dialkylphosphinsäure-Salzen und weiteren Komponenten, ein Verfahren zu ihrer Herstellung und ihre Verwendung.

Eine Reihe von Mono-Carboxylfunktionalisierten Dialkylphosphinsäuren und deren Derivate, u. a. deren Salze, sind bekannt und werden vorwiegend als Flammschutzmittel eingesetzt. Sie können nach verschiedenen Verfahren hergestellt werden.

So beschreibt die US-A-6,753,363 flammgeschützte Polyacetal-Harze, die durch Zusatz des Aluminiumsalzes der 3-(Methylhydroxyphosphinyl)-Propionsäure flammfest ausgerüstet werden.

Auch finden Salze von Mono-Carboxylfunktionalisierten Dialkylphosphinsäuren Einsatz als Additiv für Polymere mit verbesserter Transparenz und vorteilhaften mechanischen Eigenschaften und zur Herstellung optischer Materialien.

Für die Herstellung der Mono-Carboxylfunktionalisierten Dialkylphosphinsäure-Derivate, die zu den entsprechenden Salzen umgesetzt werden können, sind verschiedene Verfahren bekannt.

Im Stand der Technik mehrfach beschrieben sind Verfahren, bei denen eine Mono-Carboxylfunktionalisierte Dialkylphosphinsäure bzw. dessen Anhydrid erhalten wird, in dem Phosphonigsäure-dihalogenide (Dihalogenphosphine) mit aktivierten olefinischen Verbindungen wie z.B. Acrylsäure- oder Methacrylsäurederivaten umgesetzt werden (Houben-Weyl, Band 12/1, S. 230; V. K. Khajrullin, F. M. Kondrat'eva und A. N. Pudovik, Z. obsc. Chim. 38, 291-294 (1968); DE-A-2 528 420, JP-A-05/194 562).

Nachteilig an dem vorgenannten Stand der Technik ist die synthesebedingte Bildung von halogenhaltigen Nebenprodukten. Unter halogenhaltigen Verbindungen werden hierbei solche chemischen Verbindungen verstanden, in denen Atome der 7. Hauptgruppe, insbesondere Fluor, Chlor, Brom und Iod, chemisch an Kohlenstoff oder Phosphor gebunden, vorliegen. Außerdem werden unter halogenhaltigen Verbindungen auch solche Salze verstanden, die Halogenid-Anionen enthalten. Halogenhaltige Verbindungen, insbesondere Chlorhaltige Verbindungen, sind oft vielfach korrosiver als halogenfreie Verbindungen. Bezüglich der Anwendung als Flammschutzmittel besitzen halogenhaltige Verbindungen den Nachteil, dass sich im Brandfall korrosive und giftige Gase bilden können, die den Einsatz solcher Verbindungen als Flammschutzmittel zumindest fraglich erscheinen lassen, wenn nicht sogar ein Einsatz gar nicht möglich ist.

Zu den am häufigsten eingesetzten Phosphonigsäure-Dihalogeniden gehört das Methyldichlorphosphin, welches selbst bisher in einer sehr aufwendigen Synthese aus Phosphortrichlorid und Methylchlorid in Gegenwart von Aluminiumchlorid hergestellt wird (Houben-Weyl, Band 12/1, S. 306). Die Reaktion ist stark exotherm und technisch nur schwierig zu beherrschen. Es werden zudem verschiedene, v.a.D. halogenhaltige Nebenprodukte gebildet, die, wie zum Teil auch die vorgenannten Ausgangsprodukte selbst, giftig und/oder korrosiv, also höchst unerwünscht, sind. Angesichts des Korrosionseffekts und der Unverträglichkeit mit der Umwelt ist der Einsatz solcher Edukte und der daraus erhaltenen Nebenprodukte möglichst zu vermeiden.

Eine weitere Methode zur Synthese Mono-Carboxylfunktionalisierten Dialkylphosphinsäuren basiert auf der Umsetzung von Phosphonigsäure-Bis(trimethylsilyl)ester $HP(OSiMe_3)_2$ mit $\alpha,\beta$-ungesättigten Carbonsäure-Komponenten, anschließender Alkylierung mit Alkylhalogeniden nach der Arbuzov-Reaktion und Alkoholyse zu der entsprechenden Dialkylphosphinsäure (Kurdyumova, N. R.; Rozhko, L. F.; Ragulin, V. V.; Tsvetkov, E. N.; Russian Journal of General Chemistry (Translation of Zhurnal Obshchei Khimii) (1997), 67(12), 1852-1856). Auch dieser Syntheseweg hat den Nachteil, dass halogenhaltige Verbindungen eingesetzt werden müssen. Der als Edukt eingesetzte Phosphonigsäure-Bis(trimethylsilyl)ester wird dabei aus Kalium- oder Ammoniumhypophosphit durch Umsetzung mit Hexamethyldisilazan erhalten. Hexamethyldisilazan steht weder in großtechnischen Mengen zur Verfügung noch rechnet sich sein Einsatz, da seine Herstellung ebenfalls aufwendig ist. Eine ökonomische und wirtschaftliche Herstellung von wirklich halogenfreien Mono-Carboxylfunktionalisierten Dialkylphosphinsäuren und etwaigen Derivaten hiervon ist auf diesem Wege nicht möglich.

Es ist daher Aufgabe vorliegenden der Erfindung, extrem halogenarme bzw. sogar halogenfreie (Metall)Salze der Mono-Carboxylfunktionalisierte Dialkylphosphinsäure zur Verfügung zu stellen.

Diese Aufgabe wird gelöst durch Mischungen aus Mono-Carboxylfunktionalisierten Dialkylphosphinsäure-Salzen und weiteren Komponenten, dadurch gekennzeichnet, dass sie

A) 98 bis 100 Gew.-% Mono-Carboxylfunktionalisierte Dialkylphosphinsäure-Salze der Formel (I)

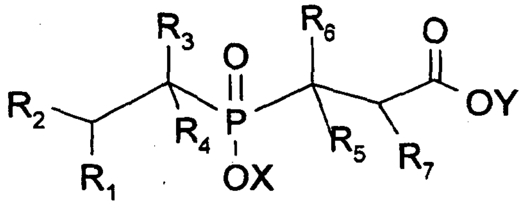

(I)

in der X und Y verschieden sind wobei X Ca, Al oder Zn und Y Methyl, Ethyl, n-Propyl, Isopropyl, n-Butyl, Isobutyl, tert. Butyl, Phenyl, 2-Hydroxyethyl, 2,3-Dihydroxypropyl, 2-Hydroxypropyl, 3-Hydroxypropyl, 4-Hydroxybutyl, 3-Hydroxybutyl, 2-Hydroxybutyl und/oder 6-Hydroxyhexyl, Allyl und/oder Glycerin bedeutet;
oder X und Y verschieden sind und Mg, Sb, Sn, Ge, Ti, Fe, Zr, Ce, Bi, Sr, Mn, Cu, Ni, Li, Na, K, und/oder H bedeuten;
oder X und Y gleich oder verschieden sind und dann jeweils Ca, Al oder Zn bedeuten;
$R_1$, $R_2$, $R_3$, $R_4$, $R_5$, $R_6$, $R_7$ gleich oder verschieden sind und unabhängig voneinander H, Methyl, Ethyl, n-Propyl, Isopropyl, tert. Butyl und/oder Phenyl bedeuten und

B) 0 bis 2 Gew.-% Halogene enthalten,

wobei die Summe der Komponenten immer 100 Gew.-% beträgt.

Bevorzugt enthalten die Mischungen 99,9995 bis 100 Gew.-% Mono-Carboxylfunktionalisierte Dialkylphosphinsäure-Salze der Formel (I) und 0 bis 0,0005 Gew.-% Halogene.

Bevorzugt handelt es sich bei dem Mono-Carboxylfunktionalisierten Dialkylphosphinsäure-Salz um 3-(Ethylhydroxyphosphinyl)-Propionsäure-Aluminium(III)salz, 3-(Ethylhydroxyphosphinyl)-Propionsäure-Calcium(II)salz, 3-(Ethylhydroxyphosphinyl)-Propionsäure-Cer(III)salz, 3-(Ethylhydroxyphosphinyl)-Propionsäure-Zink(II)salz, 3-(Ethylhydroxyphosphinyl)-2-methyl-Propionsäure-Aluminium(III)salz, 3-(Propylhydroxyphosphinyl)-Propionsäure-methylester-Aluminium(III)salz, 3-(Propylhydroxy-phosphinyl)-propionsäure-Aluminium(III)salz, 3-(Propylhydroxy-phosphinyl)-propionsäure-Zink(II)salz, 3-(Ethylhydroxyphosphinyl)-Buttersäure- Aluminium(III)salz, 3-(Ethylhydroxyphosphinyl)-Buttersäure- Zink(II)salz, , 3-(Propylhydroxyphosphinyl)-Buttersäure- Aluminium(III)salz, 3-(Ethylhydroxy-phosphinyl)-Pentansäure-Aluminium(III)salz, 3-(Propylhydroxy-phosphinyl)-2-methyl-Propionsäure-Aluminium(III)salz, , 3-(Ethylhydroxy-phosphinyl)-2-methyl-Buttersäure-Aluminium(III)salz, 3-(Ethylhydroxyphosphinyl)-Propionsäuremethylester-Aluminium(III)salz, 3-(Ethylhydroxyphosphinyl)-Propionsäure-(2-hydroxyethyl)-ester-Aluminium(III)salz, 3-(Ethylhydroxyphosphinyl)-Propionsäure-(2-hydroxyethyl)-ester-Zink(II)salz, 3-(Ethylhydroxyphosphinyl)-Propionsäure-(2,3-dihydroxypropyl)-ester Aluminium(III)salz und/oder 3-(Ethylhydroxyphosphinyl)-2-methyl-Propionsäureallylester-Aluminium(III) salz.

Die Aufgabe wird auch gelöst durch ein Verfahren zur Herstellung von Mischungen nach einem oder mehreren der Ansprüche 1 bis 3, dadurch gekennzeichnet, dass man in einer Verfahrensstufe 1 hypophosphorige Säure oder deren Salze (Komponente C) der Formel II

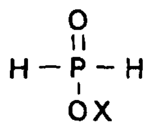

II

in der X H, Na, K oder $NH_4$ bedeutet; in Gegenwart eines radikalischen Initiators mit einem $\alpha,\beta$-ungesättigten Carbonsäure-Derivat (Komponente D) der Formel III

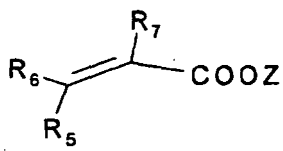

III

in der $R_5$, $R_6$, $R_7$ die gleiche Bedeutung wie in Formel I aufweisen und Z H, $C_{1-18}$-Alkyl oder $C_{6-18}$-Aryl bedeutet oder für Y steht; und mit einem Olefin (Komponente E) der Formel IV

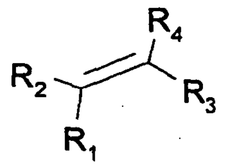

IV

in der $R_1$, $R_2$, $R_3$, $R_4$ die gleiche Bedeutung wie in Formel I aufweisen, umsetzt und in einer Verfahrensstufe 2 die so erhaltene Mono-Carboxyfunktionalisierte Dialkylphosphinsäure und/oder deren Alkalisalze mit Metallverbindungen von Mg, Ca, Al, Sb, Sn, Ge, Ti, Fe, Zr, Zn, Ce, Bi, Sr, Mn und/oder einer protonierte Stickstoffbase zu den Dialkylphosphinsäuresalzen dieser Metalle und/oder der Stickstoffverbindung nach Formel I umsetzt.

Bevorzugt bedeutet X H und Z H, Methyl, Ethyl, n-Propyl, Isopropyl, n-Butyl, Isobutyl, tert. Butyl, Hydroxyethyl oder Hydroxypropyl.

Das Verfahren ist bevorzugt dadurch gekennzeichnet, dass in Verfahrensstufe 1 in einem Schritt 1 die Komponente C in Gegenwart eines radikalischen Initiators mit Komponente E zu einer Alkylphosphonigen Säure umgesetzt wird und in Schritt 2 die resultierende Reaktionslösung mit einem Alkohol verestert wird und dabei entstehende Phosphonigsäureester destillativ abgetrennt wird und dann in einem Schritt 3 in Gegenwart eines radikalischen oder eines basischen Initiators mit Komponente D umgesetzt wird und daran anschließend die Verfahrensstufe 2 ausgeführt wird.

Bevorzugt wird im Schritt 2 die Alkylphosphonige Säure mit einem linearen oder verzweigten Alkohol der allgemeinen Formel M-OH, wobei M für einen linearen oder verzweigten Alkylrest mit 1 bis 10 Kohlenstoffatomen steht, direkt verestert.

Bevorzugt handelt es sich bei dem Alkohol um n-Butanol, Iso-Butanol oder Ethylhexanol.

Bevorzugt handelt es sich bei der Komponente C um das Ammonium- oder Natriumsalz der Hypophosphorigen Säure.

Bevorzugt handelt es sich bei dem Initiator um einen radikalischen, anionischen, kationischen oder photochemischen Initiator.

Bevorzugt handelt es sich bei dem Initiator um Peroxide bildende Verbindungen und/oder Peroxoverbindungen wie Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azoverbindungen wie Azodiisobutyronitril, 2,2'-Azobis(2-amidinopropan)-dihydrochlorid und/oder 2,2'-Azobis(N,N'-dimethylen-isobutyramidin)-dihydrochlorid.

Bevorzugt handelt es sich bei den $\alpha,\beta$-ungesättigten Carbonsäuren und $\alpha,\beta$-ungesättigten Carbonsäurederivaten um Acrylsäure, Acrylsäuremethylester, Acrylsäureethylester, Methacrylsäure, Acrylsäurehydroxyethylester, Crotonsäure, Crotonsäureethylester, Tiglinsäure (trans 2,3-Dimethylacryl-säure), (trans-)2-Pentensäure, Furan-2-carbonsäure und/oder Thiophen-2-carbonsäure.

Bevorzugt handelt es sich bei dem Olefin (Komponente E) um Ethylen, Propylen, oder beliebige Gemische davon, 1-Hexen, 1-Hepten und/oder 1-Octen oder um Allylalkohol, Allylamin, Allyl-benzol, Allylanisol, Styrol, $\alpha$-Methylstyrol, 4-Methylstyrol und/oder Vinylacetat.

Bevorzugt erfolgt die Umsetzung der Komponente C mit den Komponenten D und/oder E bei einer Temperatur von 50 bis 150°C.

Das Verfahren kann bevorzugt auch so ausgeführt werden, dass man in Verfahrensstufe 1 die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente D umsetzt, dann in einem Schritt 3 das Keton abtrennt und in einem Schritt 4 das resultierende Reaktionsgemisch in Gegenwart eines radikalischen Initiators mit der Komponente E umsetzt und anschließend die Verfahrensstufe 2 ausführt.

In einer weiteren Ausführungsform setzt man in Verfahrensstufe 1 die Komponente C in einem Schritt 1 mit einem Keton zu 1-Hydroxy-1-dialkylphosphinat um, setzt in einem Schritt 2 dieses 1-Hydroxy-1-dialkylphosphinat in Gegenwart eines radikalischen Initiators mit Komponente E um, dann trennt man in einem Schritt 3 das Keton ab und setzt in einem Schritt 4 das resultierende Reaktionsgemisch in Gegenwart eines radikalischen Initiators mit der Komponente D um und führt anschließend die Verfahrensstufe 2 aus.

Bevorzugt handelt es sich bei den Metallverbindungen der Verfahrensstufe 2 um Aluminiumhydroxid, Aluminiumsulfate, Zinksulfat-Heptahydrat, Magnesiumchlorid-Hexahydrat, und/oder Calciumchlorid-Dihydrat.

Bevorzugt erfolgt die Umsetzung in der Verfahrensstufe 2 bei einer Temperatur von 20 bis 150°C.

Die Erfindung betrifft auch die Verwendung von Mischungen nach einem oder mehreren der Ansprüche 1 bis 3 als Flammschutzmittel, zur Herstellung von Flammschutzmitteln, in flammgeschützten Formmassen oder in flammgeschützten Polymer-Formkörpern, -Filmen, -Fäden und -Fasern.

Bevorzugt enthält die flamrrigeschützte Formmasse oder die Polymer-Formkörper, -Filme, -Fäden und -Fasern 1 bis 50 Gew.-% der Mischungen nach einem oder mehreren der Ansprüche 1 bis 3, 1 bis 99 Gew.-% Polymer oder Mischungen derselben, 0 bis 60 Gew.-% Additive und 0 bis 60 Gew.-% Füllstoff, wobei die Summe der Komponenten immer 100 Gew.-% beträgt. Bevorzugt enthalten die erfindungsgemäßen Mischungen

A) 99,9995 bis 100 Gew.-% an 3-(Ethylhydroxyphosphinyl)-Propionsäure-Aluminium(III)salz, 3-(Ethylhydroxyphosphinyl)-Propionsäure-Calcium(II)salz, 3-(Ethylhydroxyphosphinyl)-Propionsäure-Cer(III)salz, 3-(Ethylhydroxyphosphinyl)-Propionsäure-Zink(II)salz, 3-(Ethylhydroxyphosphinyl)-2-methyl-Propionsäure-Aluminium(III)salz, 3-(Propylhydroxyphosphinyl)-Propionsäure-methylester-Aluminium(III)salz, 3-(Propylhydroxy-phosphinyl)-propionsäure-Aluminium(III)salz, 3-(Propylhydroxy-phosphinyl)-propionsäure-Zink(II)salz, 3-(Ethylhydroxyphosphinyl)-Buttersäure- Aluminium(III)salz, 3-(Ethylhydroxyphosphinyl)-Buttersäure- Zink(II)salz, , 3-(Propylhydroxyphosphinyl)-Buttersäure- Aluminium(III)salz, 3-(Ethylhydroxy-phosphinyl)-Pentansäure- Aluminium(III)salz, 3-(Propylhydroxy-phosphinyl)-2-methyl-Propionsäure-Aluminium(III)salz, , 3-(Ethylhydroxy-phosphinyl)-2-methyl-Buttersäure-Aluminium (III)salz, 3-(Ethylhydroxyphosphinyl)-Propionsäuremethylester-Aluminium(III)salz, 3-(Ethylhydroxyphosphinyl)-Propionsäure-(2-hydroxyethyl)-ester-Aluminium(III)salz, 3-(Ethylhydroxyphosphinyl)-Propionsäure-(2-hydroxyethyl)-ester-Zink(II)salz, 3-(Ethylhydroxyphosphinyl)-Propionsäure-(2,3-dihydroxypropyl)-ester Aluminium(III) salz und/oder 3-(Ethylhydroxyphosphinyl)-2-methyl-Propionsäure-allylester-Aluminium(III)salz und
B) 0 bis 0,0005 Gew.-% an Chlor.

Des weiteren werden auch Mischungen offenbart, die

A) 98 bis 100 Gew.-% Mono-Carboxylfunktionalisierte Dialkylphosphinsäure-Salze der Formel (I)

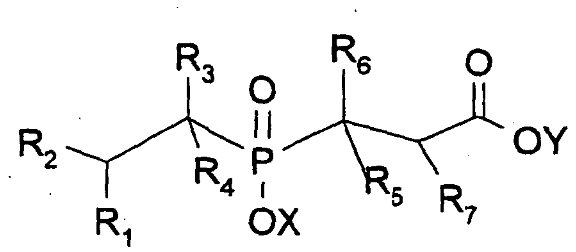

(I)

in der X ein Metall der ersten bis vierten Hauptgruppe, der Übergangsmetalle sowie Sb, Bi und Ce und/oder eine protonierte Stickstoffbase bedeutet,
Y H, $C_1$-$C_{18}$-Alkyl, $C_6$-$C_{18}$-Aryl, $C_6$-$C_{18}$-Aralkyl, $C_6$-$C_{18}$-Alkyl-Aryl, $(CH_2)_kOH$, $CH_2$-CHOH-$CH_2OH$, $(CH_2)_kO(CH_2)_kH$, $(CH_2)_k$-CH(OH)-$(CH_2)_kH$, $(CH_2$-$CH_2O)_kH$, $(CH_2$-C[$CH_3$]HO$)_kH$, $(CH_2$-C[$CH_3$]HO$)_k(CH_2$-$CH_2O)_kH$, $(CH_2$-$CH_2O)_k(CH_2$-C[$CH_3$]HO)H, $(CH_2$-$CH_2O)_k$-alkyl, $(CH_2$-C[$CH_3$]HO$)_k$-alkyl, $(CH_2$-C[$CH_3$]HO$)_k(CH_2$-$CH_2O)_k$-alkyl, $(CH_2$-$CH_2O)_k(CH_2$-C[$CH_3$]HO)O-alkyl, $(CH_2)_k$-CH=CH$(CH_2)_kH$, $(CH_2)_kNH_2$, $(CH_2)_kN[(CH_2)_kH]_2$ bedeutet wobei k eine ganze Zahl von 0 bis 100, bevorzugt 2 bis 10 ist und
oder Y die gleiche Bedeutung wie X hat, wobei dann X und Y gleich sind oder für zwei verschieden Metalle stehen,
$R_1$, $R_2$, $R_3$, $R_4$, $R_5$, $R_6$, $R_7$ gleich oder verschieden sind und unabhängig
voneinander H, $C_1$-$C_{18}$-Alkyl, $C_6$-$C_{18}$-Aryl, $C_6$-$C_{18}$-Aralkyl, $C_6$-$C_{18}$-Alkyl-Aryl, CN, CHO, OC(O)$CH_2$CN, CH(OH) $C_2H_5$, $CH_2$CH(OH)$CH_3$, 9-Anthracen, 2-Pyrrolidon, $(CH_2)_mOH$, $(CH_2)_mNH_2$, $(CH_2)_mNCS$, $(CH_2)_mNC(S)NH_2$, $(CH_2)_mSH$, $(CH_2)_m$S-2-thiazolin, $(CH_2)_mSiMe_3$, C(O)$R_8$, $(CH_2)_mC(O)R_8$, CH=CH-$R_8$, CH=CH-C(O)$R_8$ bedeuten, wobei $R_8$ für $C_1$-$C_8$-Alkyl oder $C_6$-$C_{18}$-Aryl steht und
m eine ganze Zahl von 0 bis 10, bevorzugt 1 bis 10, bedeutet und
B) 0 bis 2 Gew.-% Halogene enthalten,
wobei die Summe der Komponenten immer 100 Gew.-% beträgt.

Die Mischungen enthalten auch 99 bis 100 Gew.-% Mono-Carboxylfunktionalisierte Dialkylphosphinsäure-Salze der Formel (I) und 0 bis 1 Gew.-% Halogene.

Die Mischungen enthalten auch 99,99 bis 100 Gew.-% Mono-Carboxylfunktionalisierte Dialkylphosphinsäure-Salze der Formel (I) und 0 bis 0,01 Gew.-% Halogene.

Die Gruppen $C_6$-$C_{18}$-Aryl, $C_6$-$C_{18}$-Aralkyl und $C_6$-$C_{18}$-Alkyl-Aryl können dabei mit $SO_3X_2$, -C(O)CH3, OH,

$CH_2OH$, $CH_3SO_3X_2$, $PO_3X_2$, $NH_2$, $NO_2$, $OCH_3$, SH und/oder $OC(O)CH_3$ substituiert sein.

$R_1$, $R_2$, $R_3$, $R_4$, $R_5$, $R_6$, $R_7$ können gleich oder verschieden und unabhängig voneinander H, $C_1$-$C_6$-Alkyl und/oder Aryl, bedeuten.

Bevorzugt sind X und Y gleich oder verschieden und bedeuten jeweils Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase, d.h. X und Y können ein gleiches Metall-Kation sein oder zwei verschiedene Metall-Kationen darstellen.

Bevorzugt sind X und Y gleich oder verschieden und bedeuten jeweils Ca, Al oder Zn.

Bevorzugt sind hierbei X und Y verschieden wobei X Ca, Al oder Zn und Y Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin, bedeutet.

Geeignet sind auch 3-(Propylhydroxy-phosphinyl)-2-methyl-Buttersäure-Aluminium(III)salz, 3-(Butylhydroxy-phosphinyl)-2-methyl-Buttersäure-Aluminium(III)salz, 3-(Butylhydroxy-phosphinyl)-Buttersäure-Aluminium(III)salz, -(Propylhydroxy-phosphinyl)-Pentansäure-Aluminium(lll)salz, 3-(Butylhydroxyphosphinyl)-Pentansäure-Aluminium(III) salz, 3-(Ethylhydroxyphosphinyl)-2-methyl-Buttersäure-(2-hydroxyethyl)-ester-Aluminium(III)salz, 3-(Propylhydroxy-phosphinyl)-2-methyl-Buttersäure-(2-hydroxyethyl)-ester-Aluminium(III)salz, 3-(Ethylhydroxyphosphinyl)-2-methyl-Buttersäure-(2-hydroxypropyl)-ester-Aluminium(III)salz, 3-(Propylhydroxyphosphinyl)-2-methyl-Buttersäure-(2-hydroxypropyl)-ester-Aluminium (III) salz und/oder 3-(Propylhydroxyphosphinyl)-Propionsäure-(2,3-dihydroxypropyl)-ester-Aluminium(III)salz.

Die vorgenannte Aufgabe wird auch gelöst durch ein Verfahren zur Herstellung von Mischungen nach einem oder mehreren der Ansprüche 1 bis 4, dadurch gekennzeichnet, dass man in einer Verfahrensstufe 1 hypophosphorige Säure oder deren Salze (Komponente C) der Formel II

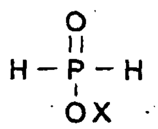

II

in der X H, Na, K oder $NH_4$ bedeutet; in Gegenwart eines radikalischen Initiators mit einem $\alpha,\beta$-ungesättigten Carbonsäurederivat (Komponente D) der Formel III

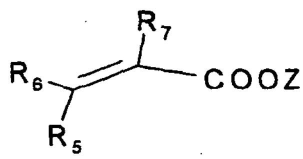

III

in der $R_5$, $R_6$, $R_7$ die gleiche Bedeutung wie in Formel I aufweisen und Z H, $C_{1-18}$-Alkyl oder $C_{6-18}$-Aryl bedeutet oder für Y steht; und mit einem Olefin (Komponente E) der Formel IV

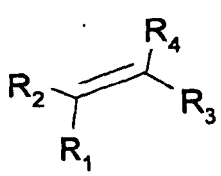

IV

in der $R_1$, $R_2$, $R_3$, $R_4$ die gleiche Bedeutung wie in Formel I aufweisen, umsetzt und in einer Verfahrensstufe 2 die so erhaltene mono-Carboxyfunktionalisierte Dialkylphosphinsäure und/oder deren Alkalisalze mit Metallverbindungen von Mg, Ca, Al, Sb, Sn, Ge, Ti, Fe, Zr, Zn, Ce, Bi, Sr, Mn und/oder einer protonierte Stickstoffbase zu den Dialkylphosphinsäuresalzen dieser Metalle und/oder der Stickstoffverbindung nach Formel I umsetzt.

Bevorzugt wird das Verfahren so ausgeführt, dass in Verfahrensstufe 1 einem ersten Verfahrensschritt die Komponente C in Gegenwart eines radikalischen Initiators mit Komponente D umgesetzt und in einem zweiten Verfahrensschritt die resultierende Reaktionslösung ebenfalls in Gegenwart eines radikalischen Initiators mit Komponente E umgesetzt wird.

Bevorzugt wird auch in Verfahrensstufe 1 in einem ersten Verfahrensschritt die Komponente C in Gegenwart eines radikalischen Initiators mit Komponente E umgesetzt und in einem zweiten Verfahrensschritt die resultierende Reaktionslösung ebenfalls in Gegenwart eines radikalischen Initiators mit Komponente D umgesetzt.

Bevorzugt werden die Komponenten C, D und E in folgenden Molverhältnissen eingesetzt:

$$p\,C + \sum_{k=1}^{n-1} x_k\,D + \sum_{k=1}^{n-1} y_k\,E + (\alpha - x_n)\,D + (\alpha - y_n)\,E = A$$

wobei C für die hypophosphorige Säure oder deren Salze der Formel II, D für das $\alpha,\beta$-ungesättigte Carbonsäurederivat oder $\alpha,\beta$-ungesättigte Carbonsäure der Formel III, E für das Olefin der Formel IV und A für das Mono-Carboxylfunktionalisierte Dialkylphosphinsäuresalz der Formel I steht und weiterhin gilt:

$$\sum_{k=1}^{n} x_k = \alpha \quad \text{und} \quad \sum_{k=1}^{n} y_k = \alpha ,$$

wobei $\alpha$ = 1 bis 3; 0,01 $\leq x_k$ und $y_k \leq \alpha$; p = 0,5 bis 3 und n = 1 bis 100 ist.

Bevorzugt kann das Verfahren so ausgeführt werden, dass in Verfahrensstufe 1 in einem ersten Schritt 1 die Komponente C in Gegenwart eines radikalischen Initiators mit einer Teilmenge $X_k$ D der Komponente D, in einem Schritt 2 die resultierende Reaktionslösung in Gegenwart eines radikalischen Initiators mit der gesamten Menge der Komponente E und in einem Schritt 3 die resultierende Reaktionslösung in Gegenwart eines radikalischen Initiators mit der restlichen Teilmenge ($\alpha$-$X_n$) D der Komponente D umgesetzt wird.

Es kann das Verfahren aber auch so ausgeführt werden, dass in Verfahrensstufe 1 in einem ersten Schritt 1 die Komponente C in Gegenwart eines radikalischen Initiators mit einer Teilmenge $y_k$ E der Komponente E, in einem Schritt 2 die resultierende Reaktionslösung in Gegenwart eines radikalischen Initiators mit der gesamten Menge der Komponente D und in einem Schritt 3 die resultierende Reaktionslösung in Gegenwart eines radikalischen Initiators mit der restlichen Teilmenge ($\alpha$-$y_n$) E der Komponente E umgesetzt wird.

In einer weiteren Ausführungsform wird in Verfahrensstufe 1 in einem Schritt 1 die Komponente C in Gegenwart eines radikalischen Initiators mit einer Teilmenge $x_k$ D der Komponente D umgesetzt und in einem Schritt 2 die resultierende Reaktionslösung in Gegenwart eines radikalischen Initiators mit einer Teilmenge $y_k$E der Komponente E umgesetzt, wobei die Schritte 1 und 2 abwechselnd so häufig wiederholt werden, bis die jeweiligen Teilmengen verbraucht sind.

In einer anderen Ausführungsform wird in Verfahrensstufe 1 in einem Schritt 1 die Komponente C in Gegenwart eines radikalischen Initiators mit einer Teilmenge $y_k$ E Komponente E umgesetzt und in einem Schritt 2 die resultierende Reaktionslösung in Gegenwart eines radikalischen Initiators mit einer Teilmenge $x_k$ D der Komponente D umgesetzt, wobei die Schritte 1 und 2 abwechselnd so häufig wiederholt werden, bis die jeweiligen Teilmengen verbraucht sind.

In einer weiteren Verfahrensweise wird in Verfahrensstufe 1 in einem Schritt 1 die Komponente C in Gegenwart eines radikalischen Initiators mit Komponente E zu einer Alkylphosphonigen Säure umgesetzt und in Schritt 2 die resultierende Reaktionslösung mit einem Alkohol verestert und der dabei entstehende Phosphonigsäureester destillativ abgetrennt und dann in einem Schritt 3 in Gegenwart eines radikalischen oder eines basischen Initiators mit Komponente D umgesetzt und daran anschließend die Verfahrensstufe 2 ausgeführt.

Bevorzugt wird der Radikalinitator in Mengen von 0,001 bis 10 Mol-%, bezogen auf die phosphorhaltige Verbindung, eingesetzt.

Bevorzugt wird der Radikalinitator mit einer Geschwindigkeit von 0,01 bis 10 Mol-% Initiator pro Stunde, bezogen auf die phosphorhaltige Verbindung, zudosiert.

Bevorzugt beträgt das Verhältnis von Olefin zu Hypophosphit und/oder hypophosphoriger Säure (auf Mol-Basis) 1 zu 3 bis 3 zu 0,5.

Besonders bevorzugt beträgt das Verhältnis von Olefin zu Hypophosphit und/oder hypophosphoriger Säure (auf Mol-Basis) 1,5 zu 3 bis 2,5 zu 1.

Bevorzugt erfolgt die Umsetzung mit der Olefinkomponente E bei einem Druck des eingesetzten Olefins von 1 bis 100 bar.

Besonders bevorzugt erfolgt die Umsetzung mit der Olefinkomponente E bei einem Druck des eingesetzten Olefins von 2 bis 50 bar.

Bevorzugt erfolgt die Umsetzung der Komponente C mit den Komponenten D und/oder E bei einer Temperatur von 0 bis 250°C.

Besonders bevorzugt erfolgt die Umsetzung der Komponente C mit den Komponenten D und/oder E bei einer Temperatur von 20 bis 200°C.

Besonders bevorzugt werden als Ketone Aceton, Methylethylketon, Diethylketon, Methylpropylketon, Isobutylmethylketon, 3-Hexanon, 2-Heptanon, 3-Heptanon, 4-Heptanon, 5-Methyl-2-hexanon, 2-Octanon, 3-Octanon oder 5-Methyl-3-heptanon eingesetzt.

Bevorzugt handelt es sich bei den eingesetzten Metallverbindungen der Verfahrensstufe 2 um Metalloxide, -hydroxide, -oxidhydroxide, -sulfate, -acetate, -nitrate, -chloride und/oder -alkoxide.

Besonders bevorzugt erfolgt die Umsetzung in der Verfahrensstufe 2 bei einer Temperatur von 80 bis 120°C.

Bevorzugt erfolgt die Umsetzung der in Verfahrensstufe 2 in wässrigem Medium.

Mit den erfindungsgemäßen Verfahren werden Mono-Carboxyfunktionalisierte Dialkylphosphinsäure-Salze in völlig halogenfreier Form zugänglich und weisen damit eine so hohe Halogenfreiheit auf, wie sie nach dem bisher bekannten Stand der Technik nicht zugänglich war.

Die erfindungsgemäßen Verfahren bieten den Vorteil, von vornherein von halogenfreien Edukten auszugehen, so dass die Endprodukte ebenfalls völlig halogenfrei sind. Der Gehalt an Halogenen liegt - wenn überhaupt solche enthalten sind - unter der Nachweisgrenze. Dagegen führen alle bisher bekannten Verfahren aus dem Stand der Technik zu wesentlich höheren Halogengehalt im jeweiligen Endprodukt.

Die Erfindung betrifft auch die Verwendung von Mischungen nach einem oder mehreren der Ansprüche 1 bis 4 als Flammschutzmittel oder zur Herstellung von Flammschutzmitteln.

Bevorzugt enthält das Flammschutzmittel 0,1 bis 90 Gew.-% der Mischungen nach einem oder mehreren der Ansprüche 1 bis 3 und 0,1 bis 50 Gew.-% weitere Additive, wobei die Summe der Komponenten immer 100 Gew.-% beträgt.

Besonders bevorzugt enthält das Flammschutzmittel 10 bis 80 Gew.-% der Mischungen nach einem oder mehreren der Ansprüche 1 bis 3 und 10 bis 40 Gew.-% weitere Additive, wobei die Summe der Komponenten immer 100 Gew.-% beträgt.

Die Erfindung betrifft auch die Verwendung von Mischungen nach einem oder mehreren der Ansprüche 1 bis 3 in flammgeschützten Formmassen.

Bevorzugt enthält die flammgeschützte Formmasse 5 bis 30 Gew.-% der Mischungen nach einem oder mehreren der Ansprüche 1 bis 3, 5 bis 9 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft auch die Verwendung von Mischungen nach einem oder mehreren der Ansprüche 1 bis 3 als Flammschutzmittel in flammgeschützten Polymer-Formkörpern, -Filmen, -Fäden und -Fasern.

Bevorzugt enthalten die Polymer-Formkörper, -Filme, -Fäden und -Fasern 5 bis 30 Gew.-% der Mischungen nach einem oder mehreren der Ansprüche 1 bis 3, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den vorgenannten Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel. Für den Fall dass X = Y ist, kann das Molverhältnis von Mono-Carboxylfunktionalisierter Dialkylphosphinsäure zum Metall 1:1 oder 1:2 betragen.

Erfindungsgemäß wird unter Halogen Fluor, Chlor, Brom, Iod verstanden, in einer Ausführung Chlor.

Es besteht ein Bedarf an Verfahren zur Herstellung von Salzen Mono- Carboxylfunktionalisierter Dialkylphosphinsäuren, welches halogenarm, auf einfache und wirtschaftliche Art und Weise durchführbar ist und bei dem einheitliche Produkte in hoher Reinheit erhalten werden. Auch sollte ein solches Verfahren den bisher bekannten umwelttechnisch deutlich überlegen sein.

Daher ist es eine weitere Aufgabe der Erfindung, ein Verfahren zur Herstellung von Salzen Mono-Carboxylfunktionalisierter Dialkylphosphinsäure zur Verfügung zu stellen, das die vorgenannten Nachteile des Standes der Technik vermeidet und von Hypophosphorige Säure oder deren Salzen ausgeht.

Das erfindungsgemäße Verfahren weist gegenüber des Standes der Technik erhebliche Vorteile auf, da es Phosphonigsäuredihalogenide und andere halogenhaltigen Verbindungen völlig vermeidet. Damit sind auch die erfindungsgemäßen Salze der Mono-Carboxylfunktionalisierten Dialkylphosphinsäure weniger korrosiv als die bisher zugänglichen Salze der Mono-Carboxylfunktionalisierten Dialkylphosphinsäure. Die niedrigere Korrosivität ist nicht nur für die Handhabung bei der Herstellung sondern auch beim Einsatz als Flammschutzmittel von Vorteil.

In der Verfahrensstufe 1 wird die Komponente C in Gegenwart eines radikalischen Initiators mit Komponente D und E in einem Lösungsmittel umgesetzt, wobei die Komponenten D und E nicht gleichzeitig sondern jeweils separat (hintereinander oder nacheinander) dosiert werden.

Handelt es sich bei der eingesetzten Komponente D nicht um eine freie Carbonsäure, sondern um einen Carbonsäureester, so muss vor oder nach der beschriebenen Umsetzung eine Hydrolyse durchgeführt werden, um die freie Carbonsäure zu erhalten.

Überraschender Weise kann durch iterative Umsetzung von $\alpha,\beta$-ungesättigte Carbonsäuren oder -estern und Olefinen mit Derivaten der Hypophosphorigen Säure ohne Isolierung der jeweiligen Monoalkylphosphinsäure-Derivate die Mono-Carboxylfunktionalisierten Dialkylphosphinsäure in guten Ausbeuten erhalten werden. Bei der Umsetzung mit einem $\alpha,\beta$-ungesättigte Carbonsäureester ist noch eine Hydrolyseschritt nötig, um die freie Mono-Carboxylfunktionalisierte Dialkylphosphinsäure zu erhalten.

Die Veresterung der phosphonigen Säure zum entsprechenden Monoester kann beispielsweise durch Umsetzung mit höhersiedenden Alkoholen unter Entfernung des gebildeten Wassers durch Azeotropdestillation erreicht werden.

Bevorzugt wird in Anwesenheit von Katalysatoren addiert.

Bevorzugt handelt es sich dabei um basische Katalysatoren. Alternativ können auch radikalische oder kationische Initiatoren eingesetzt werden.

Bevorzugt handelt es sich bei den basischen Initiatoren um Alkali- und/oder Erdalkalialkoholate. Besonders bevorzugt wird Natriummethanolat oder Natriumethanolat verwendet.

Bevorzugt wird die Hydrolyse des Esters in Gegenwart einer starken Mineralsäure durchgeführt. Bevorzugt handelt es sich dabei um konzentrierte Schwefelsäure.

Bevorzugt beträgt das Verhältnis $\alpha,\beta$-ungesättigten Carbonsäuren-Derivat und Olefine zu Hypophosphit und/oder hypophosphoriger Säure (auf Mol-Basis) in Verfahrensstufe 1) entsprechend der Formel für die Molverhältnisse:

$$0.01 \leq x_k \text{ und } y_k \leq \alpha,\ \alpha = 1\text{-}3,\ p = 0.5\text{-}3.0,\ \text{und } n = 1\text{-}100,$$

bevorzugt

$$0.05 \leq x_k \text{ und } y_k \leq \alpha,\ \alpha = 1\text{-}1.5,\ p = 0.8\text{-}1.2,\ n = 2\text{-}20.$$

Bevorzugt werden anorganische Lösungsmittel, organische Lösungsmittel oder beliebige Mischungen derselben eingesetzt.

Bevorzugt wird als anorganisches Lösungsmittel Wasser eingesetzt. Bevorzugt wird der pH-Wert bei wässrigem Lösungsmittel auf 0-14, bevorzugt 2-9 eingestellt.

Bevorzugt wird der pH-Wert mit Mineralsäuren, sauren Salzen, Carbonsäuren, Alkalien und/oder Elektrolyten wie z. B. Natriumbisulfat, Natriumbisulfit und/oder Kaliumbisulfit eingestellt. Bevorzugt handelt es sich bei den Carbonsäuren um Ameisensäure, Essigsäure, Propionsäure, Buttersäure und/oder längerkettige Carbonsäuren und/oder um deren Dimere, Oligomere und/oder Polymere. Bevorzugt handelt es sich in Verfahrensstufe 1 bei dem Salz der hypophosphorigen Säure um ein Salz dessen Kation ein Element der 1. Hauptgruppe ist und/oder dessen Kation auf ein organisch substituiertes Element der 5. Hauptgruppe basiert. Besonders bevorzugt handelt es um ein Ammonium- oder Alkalisalz, insbesondere um das Natriumsalz.

Bevorzugt stellt man in Verfahrensstufe 1 die Hypophosphorige Säure in situ aus Salzen der Hypophosphorigen Säure und mindestens einer Mineralsäure her, wobei das Verhältnis von Additiv-Säure zu Hypophosphit (auf Äquivalentbasis) 0 zu 1 bis 2 zu 1 beträgt.

Als Radikalinitiatoren für die erfindungsgemäßen Verfahren sind alle Systeme geeignet, die freie Radikale generieren. Bevorzugte Radikalinitiatoren sind PeroxoVerbindungen wie Peroxomonoschwefelsäure, Kaliumpersulfat (Kaliumperoxomonosulfat), Caroat(TM), Oxone(TM), Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Besonders bevorzugt sind Verbindungen, die im Lösemittelsystem Peroxide bilden können wie Natriumperoxid,

Natriumperoxidediperoxohydrat, Natriumperoxiddiperoxohydrathydrat, Natriumperoxidedihydrat, Natriumperoxidoctahydrat, Lithiumperoxid, Lithiumperoxidmonoperoxohydrattrihydrat, Calciumperoxid, Strontiumperoxid, Bariumperoxid, Magnesiumperoxid, Zinkperoxid, Kaliumhyperoxid, Kaliumperoxiddiperoxohydrat, Natriumperoxoboratetetrahydrat, Natriumperoxoborattrihydrat, Natriumperoxoboratmonohydrat, Wasserfreies Natrium peroxoborat, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Calciumhydrogenperoxide, Calciumperoxidperoxohydrat, Ammoniumtriphosphatediperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Besonders bevorzugt sind Wasserstoffperoxid, Perameisensäure, Peressigsäure, Benzoylperoxid, Di-t-butylperoxid, Dicumylperoxid, 2,4-Dichlorobenzoylperoxid, Decanoylperoxid, Lauroylperoxid, Cumolhydroperoxid, Pinenhydroperoxid, p-Menthanhydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxymaleinsäure, t-Butylperoxybenzoat, Acetylcyclohexylsulfonylperoxid.

Bevorzugt werden als Radikalstarter auch wasserlösliche Azo-Verbindungen eingesetzt. Geeignet sind Azoinitiatoren wie ®VAZO 52, ®VAZO 64 (AIBN), ®VAZO 67, ®VAZO 88, ®VAZO 68 der Fa. Dupont-Biesteritz, V-70 2,2’-Azobis(4-methoxy-2,4-dimethyl valeronitril),V-65 2,2’-Azobis(2,4-dimethylvaleronitril)V-601 Dimethyl 2,2’-azobis(2-methylpropionat),V-59 2,2’-Azobis(2-methylbutyronitril),V-40, VF-096 1,1’-Azobis (cyclohexane-1-carbonitril),V-30 1-[(cyano-1-methylethyl)azo]formamid, VAm-110 2,2’-Azobis(N-butyl-2-methylpropionamid),VAm-111 2,2’-Azobis(N-cyclohexyl-2-methylpropionamid), VA-046B 2,2’-Azobis[2-(2-imidazolin-2-yl)propandisulfatedihydrate, VA-057 2,2’-Azobis [N-(2-carboxyethyl)-2-methylpropionamidin]tetrahydrat, VA-061 2,2’-Azobis[2-(2-imidazolin-2-yl)propan], VA-080 2,2’-Azobis{2-methyl-N-[1,1-bis(hydroxymethyl)-2-hydroxyethyl] propionamid, VA-085 2,2’-Azobis{2-methyl-N-[2-(1-hydroxybuthyl)]propionamid}, VA-086 2,2’-Azobis[2-methyl-N-(2-hydroxyethyl)-propionamid] von Wako Chemicals.

Weiterhin bevorzugt sind Azoinitiatoren wie 2-t-Butylazo-2-cyanopropan, Dimethylazodiisobutyrat, Azodiisobutyronitril, 2-t-Butylazo-1-cyanocyclohexan, 1-t-Amylazo-1-cyanocyclohexan. Weiterhin sind bevorzugt Alkylperketale wie 2,2-Bis-(t-butylper-oxy)butan, Ethyl-3,3-bis(t-butylperoxy)butyrat, 1,1-Di-(t-butylperoxy)-cyclohexan.

Bevorzugt wird der Radikalinitiator in Mengen von 0.001 bis 10 Mol-%, bezogen auf die phosphorhaltige Verbindung, eingesetzt, besonders bevorzugt in Mengen von 0,05-5 Mol-%.

Bevorzugt wird der Radikalinitiator mit einer Geschwindigkeit von 0,01 bis 10 Mol-% Initiator pro Stunde, bezogen auf die phosphorhaltige Verbindung zudosiert.

Bevorzugt wird der Radikalinitiator in dem genannten Lösungsmittel eingesetzt.

Bevorzugt werden in Verfahrensstufe 1 als Olefine auch cyclische Olefine, wie Cyclopenten, Cyclohexen, Cyclohexenole, Cyclohexenone, Cyclohepten, Cyclohexenole, Cyclohexenone, Cycloocten, Cyclooctenole und/oder Cyclooctenone, eingesetzt.

In einer anderen Ausführung werden funktionalisierte Olefine, wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol,-Styrol, $\alpha$-Methylstyrol, 4-Methylstyrol, Vinylacetat, 9-Vinylanthra-cen, 2-Vinylpyridin, 4-Vinylpyridin und/oder 1-Vinyl-2-pyrrolidon eingesetzt.

Bevorzugt besteht in Verfahrensstufe 1 die Atmosphäre bei der Umsetzung mit der Komponente D zu 50 bis 99,9 Gew.-% aus Bestandteilen des Lösungsmittels und der Komponente D, bevorzugt zu 70 bis 95 Gew.-%.

Bevorzugt besteht die Atmosphäre bei der Umsetzung mit dem Olefin (Komponente E) zu 50 bis 99,9 Gew.-% aus Bestandteilen des Lösungsmittels und Olefin, bevorzugt zu 70 bis 95 Gew.-%.

Bevorzugt enthält die Atmosphäre gasförmige Komponenten, die nicht an der Reaktion teilnehmen.

Bevorzugt handelt es sich bei den gasförmigen Komponenten um Sauerstoff, Stickstoff, Kohlendioxid, Edelgase, Wasserstoff und/oder Alkane.

Bevorzugt erfolgt in Verfahrensstufe 1 die Umsetzung während des Zusatzes der Komponente D bevorzugt bei einem Druck von 1 bis 20 bar.

Bevorzugt erfährt in Verfahrensstufe 1 die Reaktionslösung bei der Umsetzung der Komponente C mit den Komponenten D oder E eine Mischintensität, die einer Rotations-Reynolds-Zahl von 1 bis 1000000, bevorzugt von 100 bis 100000 entspricht.

Bevorzugt erfolgt in Verfahrensstufe 1 eine intensive Durchmischung von Olefin, $\alpha,\beta$-ungesättigten Carbonsäuren -Derivaten), Radikalinitiator, Lösungsmittel und Hypophosphoriger Säure und/oder deren Salzen unter einem Energieeintrag von 0,083 bis 10 $kW/m^3$, bevorzugt 0,33 - 1,65 $kW/m^3$.

Bevorzugte Apparate sind Rührkessel, Rührkesselkaskaden, Strömungsrohre, Blasensäulen und Wäscher.

Der Eintrag von gasförmigen Olefinkomponenten erfolgt bevorzugt durch Düsen (z.B. Venturidüsen), Begasungsrührer, Turbinenrührer und/oder Scheibenrührer.

Bevorzugt setzt man in Verfahrensstufe 2 die nach Verfahrensstufe 1 erhaltenen erhaltene Mono-Carboxylfunktionalisierten Dialkylphosphinsäuren und/oder -Alkalisalze mit Metallverbindungen von Mg, Ca, Al, Zn, Ti, Sn, Zr, Ce oder Fe zu den Mono-Carboxylfunktionalisierten Dialkylphosphinsäuresalzen dieser Metalle um.

Bevorzugt wird die Umsetzung der Mono-Carboxylfunktionalisierten Dialkylphosphinsäure und/oder -salze mit Metallen und/oder Metallverbindungen nach Verfahrensstufe II) für vierwertige Metallionen oder Metalle mit stabiler vierwertiger Oxidationsstufe in einem Molverhältnis von carboxylfunktionalisierter Dialkylphosphinsäure/-salz zu Metall von 6 zu 1 bis 1 zu 2,5 durchgeführt.

Bevorzugt wird die Umsetzung der Mono-Carboxylfunktionalisierten Dialkylphosphinsäure und/oder -salzen mit Metallen und/oder Metallverbindungen nach Verfahrensstufe II) für dreiwertige Metallionen oder Metalle mit stabiler dreiwertiger Oxidationsstufe in einem Molverhältnis von Mono-Carboxylfunktionalisierter Dialkylphosphinsäure/-salz zu Metall von 4,5 zu 1 bis 1 zu 2,5 durchgeführt.

Bevorzugt wird die Umsetzung der Mono-Carboxylfunktionalisierten Dialkylphosphinsäure und/oder -salzen mit Metallen und/oder Metallverbindungen nach Verfahrensstufe II) für zweiwertige Metallionen oder Metalle mit stabiler zweiwertiger Oxidationsstufe in einem Molverhältnis von Mono-Carboxylfunktionalisierter Dialkylphosphinsäure/-salz zu Metall von 3 zu 1 bis 1 zu 2,5 durchgeführt.

Bevorzugt wird die Umsetzung der Mono-Carboxylfunktionalisierten Dialkylphosphinsäure und/oder -salzen mit Metallen und/oder Metallverbindungen nach Verfahrensstufe II) für einwertige Metallionen oder Metalle mit stabiler einwertiger Oxidationsstufe in einem Molverhältnis von Mono-Carboxylfunktionalisierter Dialkylphosphinsäure/-salz zu Metall von 2,5 zu 1 bis 1 zu 3,5 durchgeführt.

Bevorzugt führt man in Verfahrenstufe I) erhaltenes Mono-Carboxylfunktionalisiertes Dialkylphosphinsäure-Alkalisalz in die Dialkylphosphinsäure über und setzt in Verfahrensstufe II) diese mit Metallverbindungen von Mg, Ca, Al, Zn, Ti, Sn, Zr, Ce oder Fe zu den Mono-Carboxylfunktionalisierten Dialkylphosphinsäuresalzen dieser Metalle um.

Bevorzugt wandelt man in Verfahrenstufe I) erhaltene Mono-Carboxylfunktionalisierte Dialkylphosphinsäure in ein Dialkylphosphinsäure-Alkalisalz um und setzt in Verfahrensstufe II) dieses mit Metallverbindungen von Mg, Ca, Al, Zn, Ti, Sn, Zr, Ce oder Fe zu den Mono-Carboxylfunktionalisierten Dialkylphosphinsäuresalzen dieser Metalle um.

Bevorzugt handelt es sich bei den Metallverbindungen von Mg, Ca, Al, Zn, Ti, Sn, Zr, Ce oder Fe für Verfahrenstufe II) um Metalle, Metalloxide, -hydroxide, -oxidhydroxide, -borate, -carbonate, -hydroxocarbonate, -hydroxocarbonathydrate, gemischten -hydroxocarbonate, - gemischte hydroxocarbonathydrate, -phosphate, -sulfate, -sulfat hydrate, -hydroxosulfathydrate, gemischte -hydroxosulfathydrate, oxysulfate, -acetate, -nitrate, fluorid, -fluoridhydrate, -chlorid, chloridhydrate, -oxychloride, -bromide, -iodide, -iodid hydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Bei den Aluminiumverbindungen ist metallisches Aluminium und Aluminiumsalze mit Anionen der siebten Hauptgruppe wie z.B. Aluminiumfluorid, Aluminiumfluoridtrihydrat, Aluminiumchlorid (wasserfrei, kristallisiert; wasserfrei, sublimiert), Aluminiumchlorid hexahydrat, Aluminiumhydroxychlorid, ALCHLOR®-AC von Hardman Australien, basische Aluminiumchloridlösung, Aluminiumchloridlösung, sulfatkonditionierte Polyaluminiumchloridlösung (PACS) von Lurgi Lifescience, OBRAFLOC 18® von Oker Chemie GmbH, Alkaflock®, Ekocid® 60-Typen, Sachtoklar®-Typen, Ekofloc®-Typen, Ekozet-Typen von Sachtleben, Locron®-, Parimal®-Typen von Clariant, wasserfreies Aluminiumbromid, Aluminiumiodid, Aluminiumiodidhexahydrat, bevorzugt.

Bevorzugt sind Aluminiumsalze mit Anionen der sechsten Hauptgruppe wie z.B. Aluminiumsulfid, Aluminiumselenid.

Bevorzugt sind Aluminiumsalze mit Anionen der fünften Hauptgruppe wie z.B. Aluminiumphosphid, Aluminiumhypophosphit, Aluminiumantimonid, Aluminiumnitrid sowie Aluminiumsalze mit Anionen der vierten Hauptgruppe wie z.B. Aluminiumcarbid, Aluminiumhexafluorosilicat; ebenso Aluminiumsalze mit Anionen der ersten Hauptgruppe wie z.B. Aluminiumhydrid, Aluminium-Calcium-Hydrid, Aluminiumborhydrid oder auch Aluminiumsalze der Oxosäuren der siebten Hauptgruppe wie z.B. Aluminiumchlorat.

Bevorzugt sind Aluminiumsalze der Oxosäuren der sechsten Hauptgruppe wie z.B. Aluminiumsulfat, Aluminiumsulfathydrat, Aluminiumsulfathexahydrat, Aluminiumsulfathexadekasulfat, Aluminiumsulfat octadekasulfat, Aluminiumsulfat-Lösung von Ekachemicals, Aluminiumsulfat-flüssig von Oker Chemie GmbH, Natrium-Aluminiumsulfat, Natrium-Aluminiumsulfatdodekahydrat, Aluminium-Kaliumsulfat, Aluminium-Kaliumsulfatdodecahydrat, Aluminiumammoniumsulfat, Aluminiumammoniumsulfatdodecahydrat, Magaldrat ($Al_5Mg_{10}(OH)_{31}$ $(SO_4)_2$ x $nH_2O$).

Bevorzugt sind auch Aluminiumsalze der Oxosäuren der fünften Hauptgruppe wie z.B. Aluminiumnitratnonahydrat, Aluminiummetaphosphat, Aluminiumphosphat, leichtes Aluminiumphosphathydrat, monobasisches Aluminiumphosphat, monobasische Aluminiumphosphat-Lösung; ebenso Aluminiumsalze der Oxosäuren der vierten Hauptgruppe wie z.B. Aluminiumsilicat, Aluminium-Magnesiumsilicat, Aluminiummagnesiumsilicathydrat (Almasilat), Aluminiumcarbonat, Hydrotalcit ($Mg_6Al_2(OH)_{16}CO_3$ * $nH_2O$), Dihydroxyaluminiumnatriumcarbonat, $NaAl(OH)_2CO_3$ und Aluminiumsalze der Oxosäuren der dritten Hauptgruppe wie z.B. Aluminiumborat oder auch Aluminiumsalze der Pseudohalogenide

wie z.B. Aluminiumthiocyanat.

Bevorzugt sind Aluminiumoxid (purum, purissum, technisch, basisch, neutral, sauer), Aluminiumoxidhydrat, Aluminiumhydroxid oder gemischtes Aluminiumoxidhydroxid und/oder Polyaluminiumhydroxy-Verbindungen, die vorzugsweise einen Aluminiumgehalt von 9 bis 40 Gew.-% besitzen.

Bevorzugte Aluminiumsalze sind solche mit organischen Anionen z.B. Aluminiumsalze von Mono-, Di-, Oligo-, Polycarbonsäuren wie z.B. Aluminiumdiacetat, Aluminiumacetat basisch, Aluminiumsubacetat, Aluminiumacetotartrat, Aluminiumformiat, Aluminiumlactat, Aluminiumoxalat, Aluminiumtartrat, Aluminiumoleat, Aluminiumpalmitat, Aluminiummonosterarat, Aluminiumstearat, Aluminium trifluoromethansulfonat, Aluminiumbenzoat, Aluminiumsalicylat, Aluminiumhexaharnstoffsulfattriiodid, Aluminium-8-oxychinolat.

Bei den Zink-Verbindungen ist elementares, metallisches Zink sowie Zinksalze mit anorganischen Anionen wie z.B. Zinkhalogenide (Zinkfluorid, Zinkfluoridtetrahydrat, Zinkchloride (Zinkbutter), Bromide Zinkiodid) bevorzugt.
Bevorzugt sind Zinksalze der Oxosäuren der dritten Hauptgruppe (Zinkborat, z.B. ®Firebrake ZB, ®Firebrake 415, ®Firebrake 500) sowie Zinksalze der Oxosäuren der vierten Hauptgruppe (basisches) Zinkcarbonat, Zinkhydroxidcarbonat, wasserfreies Zinkcarbonat, basisches Zinkcarbonathydrat, (basisches) Zinksilicat, Zinkhexafluorosilicat, Zinkhexafluorosilicat hexahydrat, Zinkstannat, Zinkhydroxidstannat, Zink-Magnesium-Aluminium-Hydroxid-Carbonat) und Zinksalze der Oxosäuren der fünften Hauptgruppe (Zinknitrat, Zinknitrathexahydrat, Zinknitrit, Zinkphosphat, Zinkpyrophosphat); ebenso Zinksalze der Oxosäuren der sechsten Hauptgruppe (Zinksulfat, Zinksulfatmonohydrat, Zinksulfatheptahydrat) und Zinksalze der Oxosäuren der siebten Hauptgruppe (Hypohalogenite, Halogenite, Halogenate, z.B. Zinkiodat, Perhalogenate, z.B. Zinkperchlorat).

Bevorzugt sind Zinksalze der Pseudohalogenide (Zinkthiocyanat, Zinkcyanat Zinkcyanid).

Bevorzugt sind Zinkoxide, Zinkperoxide (z.B. Zinkperoxid), Zinkhydroxide oder gemischte Zinkoxidhydroxide (Standard-Zinkoxid, z.B. von Grillo, aktiviertes Zinkoxid z.B. von Rheinchemie, Zincit, Calamin).

Bevorzugt sind Zinksalze der Oxosäuren der Übergangsmetalle (Zinkchromat (VI)hydroxyd (Zinkgelb), Zinkchromit, Zinkmolybdat, z.B. ™Kemgard 911 B, Zinkpermanganat, Zinkmolybdat-Magnesiumsilicat, z.B. ™Kemgard 911 C). Bevorzugte Zinksalze sind solche mit organischen Anionen, hierzu gehören Zinksalze von Mono-, Di-, Oligo-, Polycarbonsäuren, Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat, der Oxalsäure (Zinkoxalat), der Weinsäure (Zinktartrat), Citronensäure (tribasisches Zinkcitrat dihydrat), Benzoesäure (Berizoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionaen (Zinkphenolat etc), Zink-para-Phenolsulfonat, Zink-para-Phenolsulfonathydrat, Zinkacetylacetonat hydrat, Zinktannat, Zinkdimethyldithiocarbamat, Zinktrifluormethansulfonat.

Bevorzugt sind Zinkphosphid, Zinkselenid, Zinktellurid.

Bei den Titan-Verbindungen ist metallisches Titan ebenso wie Titansalze mit anorganischen Anionen wie z.B. Chlorid-, Nitrat- oder Sulfat-Ionen sowie organischen Anionen wie z.B. Formiat- oder Acetat-Ionen. Besonders bevorzugt sind Titandichlorid, Titansesquisulfat, Titan(IV)bromid, Titan(IV)fluorid, Titan(III)chlorid, Titan(IV)chlorid, Titan(IV)chlorid-Tetrahydrofuran-Komplex, Titan(IV)oxychlorid, Titan(IV)oxychlorid-Salzsäure-Lösung, Titan(IV)oxysulfat, Titan(IV)oxysulfat-Schwefel-säure-Lösung oder auch Titanoxide. Bevorzugte Titan-Alkoxide sind Titan-(IV)-n-propoxid (®Tilcom NPT, ®Vertec NPT), Titan-(IV)-n-butoxid, Titanchloridtriisopropoxid, Titan-(IV)-ethoxid, Titan-(IV)-2-ethylhexyloxid (®Tilcom EHT, ®Vertetec EHT).

Bei den Zinn-Verbindungen ist metallisches Zinn sowie Zinnsalze (Zinn(II)chlorid, Zinn(II)chlorid dihydrat, Zinn (IV)chlorid) bevorzugt, ebenso Zinnoxide sowie als bevorzugtes Zinn-Alkoxid Zinn-(IV)-tert-butoxid.
Bei den Cer-Verbindungen sind die Cer(III)salze (Cer(III)fluorid, Cer(III)chlorid-Heptahydrat, Cer(III)nitrat-Hexahydrat) bevorzugt.

Bei den Zirkonium-Verbindungen ist metallisches Zirkonium sowie Zirkoniumsalze wie Zirkonium(IV)chlorid, Zirconiumsulfat, Zirkoniumsulfattetrahydrat, Zirconylacetat, Zirconylchlorid, Zirconylchloridoctahydrat bevorzugt. Weiterhin bevorzugt sind Zirkonoxide sowie als bevorzugtes Zirkonium-Alkoxid Zirkon-(IV)-tert-butoxid.

Bevorzugt erfolgt die Umsetzung in Verfahrensstufe II) von Mono-Carboxylfunktionalisierten Dialkylphosphinsäuren und/oder deren Alkalisalzen mit Metallverbindungen von Mg, Ca, Al, Zn, Ti, Sn, Zr, Ce oder Fe zu den Mono-Carboxylfunktionalisierten Dialkylphosphinsäuresalzen dieser Metalle bei einem Feststoffgehalt der Mono-Carboxylfunktionalisierten Dialkylphosphinsäuresalze dieser Metalle von 0,1 bis 70 Gew.-%, bevorzugt 5 bis 40 Gew.-%.

Bevorzugt erfolgt die Umsetzung in Verfahrensstufe II) bei einer Temperatur von 20 bis 250°C, bevorzugt bei einer Temperatur von 80 bis 120°C.

Bevorzugt erfolgt die Umsetzung in Verfahrensstufe 2 bei einem Druck zwischen 1 Pa und 200 MPa, bevorzugt 0,01 MPa bis 10 MPa.

Bevorzugt erfolgt die Umsetzung in Verfahrensstufe 2 während einer Reaktionszeit von $1*10^{-7}$ bis $1*10^{2}$ h.

Bevorzugt werden die Mono-Carboxylfunktionalisierten Dialkylphosphinsäuresalze der Metalle Mg, Ca, Al, Zn, Ti, Sn, Zr, Ce oder Fe aus Verfahrensstufe 2 durch Fest/Flüssig-Trennverfahren oder durch Hydrozyklonieren, Filtrieren und/oder Zentrifugieren aus dem Reaktionsgemisch der Verfahrensstufe 2 abgetrennt.

Bevorzugt wird das nach der Verfahrensstufe 2 durch Filtrieren und/oder Zentrifugieren aus dem Reaktionsgemisch abgetrennte Mono-Carboxylfunktionalisierten Dialkylphosphinsäuresalz der Metalle Mg, Ca, Al, Zn, Ti, Sn, Zr, Ce oder Fe getrocknet.

Bevorzugt wird das nach Verfahrensstufe 1 erhaltene Produktgemisch ohne weitere Reinigung in Verfahrensstufe 2 mit den Metallverbindungen umgesetzt.

Bevorzugt ist die Umsetzung in Verfahrensstufe 2 im durch Stufe 1 gegebenen Lösungsmittelsystem.

Bevorzugt ist die Umsetzung in Verfahrensstufe 2 in einem modifizierten gegebenen Lösungsmittelsystem. Bevorzugt wird das Lösungsmittelsystem modifiziert durch Zugabe von aciden Komponenten, Lösevermittlern, Schauminhibitoren etc.

In einer weiteren Ausführungsform des Verfahrens wird das nach Verfahrensstufe 2 erhaltene Produktgemisch aufgearbeitet.

In einer weiteren Ausführungsform des Verfahrens wird das nach Verfahrensstufe 1 erhaltene Produktgemisch aufgearbeitet und danach die nach Verfahrensstufe 1 erhaltenen Dialkylphosphinsäuren und/oder deren Alkalisalze in Verfahrensstufe 2 mit den Metallverbindungen umgesetzt.

Bevorzugt wird das Produktgemisch aufgearbeitet, indem die Dialkylphosphinsäuren und/oder deren Alkalisalze isoliert werden.

Bevorzugt erfolgt der Isolierschritt durch Entfernen des Lösungsmittelsystems, z.B. durch Eindampfen.

Bevorzugt erfolgt der Isolierschritt durch Entfernen des Lösungsmittelsystems und der darin gelösten Nebenkomponenten, z.B. durch Fest/Flüssig-Trennverfahren.

Bevorzugt wird das Produktgemisch aufgearbeitet, indem unlösliche Nebenprodukte abgetrennt werden z.B. durch Fest/Flüssig-Trennverfahren.

Bevorzugt weist das Mono-Carboxylfunktionalisierte Dialkylphosphinsäuresalz der Metalle Mg, Ca, Al, Zn, Ti, Sn, Zr, Ce oder Fe eine Restfeuchte von 0,01 bis 10 Gew.-%, bevorzugt von 0,1 bis 1 Gew.-%, auf.

Bevorzugt weist das Mono-Carboxylfunktionalisierte Dialkylphosphinsäuresalz der Metalle Mg, Ca, Al, Zn, Ti, Sn, Zr, Ce oder Fe eine mittlere Teilchengröße von 0,1 bis 2000 μm, bevorzugt von 10 bis 500 μm, auf.

Bevorzugt weist das Mono-Carboxylfunktionalisierte Dialkylphosphinsäuresalz der Metalle Mg, Ca, Al, Zn, Ti, Sn, Zr, Ce oder Fe eine Schüttdichte von 80 bis 800 g/l, bevorzugt von 200 bis 700 g/l, auf.

Bevorzugt weist das Mono-Carboxylfunktionalisierte Dialkylphosphinsäuresalz der Metalle Mg, Ca, Al, Zn, Ti, Sn, Zr, Ce oder Fe eine Rieselfähigkeit nach Pfrengle von 0,5 bis 10, bevorzugt von 1 bis 5 auf.

Insgesamt werden nach den beanspruchten Verfahren Mischungen enthalten, die 99,995 - 99,999999 % an Mono-Carboxylfunktionalisierte Dialkylphosphinsäuresalz und $10^{-6}$ - 0,0005 % Anteile Halogene enthalten.

Die Erfindung betrifft auch Verwendung der erfindungsgemäßen Mischungen zur Herstellung von Flammschutzmitteln für thermoplastische Polymere wie Polyester, Polystyrol oder Polyamid und für Duroplaste.

Die Erfindung betrifft auch Flammschutzmittel, die die erfindungsgemäßen Mischungen enthalten.

Die Erfindung betrifft auch die Verwendung der erfindungsgemäßen Mischungen als Zwischenstufe zur Herstellung von Flammschutzmitteln.

Außerdem betrifft die Erfindung Polymer-Formkörper, -Filme, -Fäden und -Fasern, enthaltend erfindungsgemäß hergestellte halogenarme Mono-Carboxylfunktionalisierten Dialkylphosphinsäuresalze der Metalle Mg, Ca, Al, Zn, Ti, Sn, Zr, Ce oder Fe.

Insbesondere betrifft die Erfindung die Verwendung der erfindungsgemäßen Mischungen als Flammschutzmittel für thermoplastische Polymere wie Polyester, Polystyrol oder Polyamid und für duroplastische Polymere wie ungesättigte Polyesterharze, Epoxidharze, Polyurethane oder Acrylate.

Insbesondere betrifft die Erfindung die Verwendung der erfindungsgemäßen Mischungen als Zwischenstufe zur Herstellung von Flammschutzmitteln für thermoplastische Polymere wie Polyester, Polystyrol oder Polyamid und für duroplastische Polymere wie ungesättigte Polyesterharze, Epoxidharze, Polyurethane oder Acrylate.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Blockcopolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeigneten Polystyrolen um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten

oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Bevorzugt handelt es sich bei den Polymeren um auch Polyamide und Copolyamide, die sich von Diaminen und Dicarbonsäuren und/oder von Aminocarbonsäuren oder den entsprechenden Lactamen ableiten, wie Polyamid 2,12, Polyamid 4 (Poly-4-aminobuttersäure, ®Nylon 4, Fa. DuPont), Polyamid 4,6 (Poly(tetramethylenadipamid), Poly-(tetramethylen-adipinsäurediamid), ®Nylon 4/6, Fa. DuPont), Polyamid 6 (Polycaprolactam, Poly-6-aminohexansäure, ®Nylon 6, Fa. DuPont, ®Akulon K122, Fa. DSM; ®Zytel 7301, Fa. DuPont; ®Durethan B 29, Fa. Bayer), Polyamid 6,6 ((Poly(N,N'-hexamethyleneadipinediamid), ®Nylon 6/6 , Fa. DuPont, ®Zytel 101, Fa. DuPont; ®Durethan A30, ®Durethan AKV, ®Durethan AM, Fa. Bayer; ®Ultramid A3, Fa. BASF), Polyamid 6,9 (Poly(hexamethylen nonanediamid), ®Nylon 6/9 , Fa. DuPont), Polyamid 6,10 (Poly(hexamethylen sebacamid), ®Nylon 6/10, Fa. DuPont), Polyamid 6,12 (Poly(hexamethylene dodecanediamid), ®Nylon 6/12, Fa. DuPont), Polyamid 6,66 (Poly(hexamethylene adipamide-co-caprolactam),®Nylon 6/66 , Fa. DuPont), Polyamid 7 (Poly-7-aminoheptansäure, ®Nylon 7, Fa. DuPont), Polyamid 7,7 (Polyheptamethylenpimelamid, ®Nylon 7,7, Fa. DuPont), Polyamid 8 (Poly-8-aminooctansäure, ®Nylon 8, Fa. DuPont), Polyamid 8,8 (Polyoctamethylensuberamid, ®Nylon 8,8, Fa. DuPont), Polyamid 9 (Poly-9-aminononansäure, ®Nylon 9, Fa. DuPont), Polyamid 9,9 (Polynonamethylenazelamid, ®Nylon 9,9, Fa. DuPont), Polyamid 10 (Poly-10-aminodecansäure, ®Nylon 10, Fa. DuPont), Polyamid 10,9 (Poly(decamethylenazelamid), ®Nylon 10,9, Fa. DuPont), Polyamid 10,10 (Polydecamethylensebacamid, ®Nylon 10,10, Fa. DuPont), Polyamid 11 (Poly-11-aminoundecansäure, ®Nylon 11, Fa. DuPont), Polyamid 12 (Polylauryllactam, ®Nylon 12 , Fa. DuPont, ®Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z.B. Poly-2,4,4-trimethylhexamethylen-terephthalamid oder Poly-m-phenylenisophthalamid. Blockcopolymere der vorstehend genannten Polyamide mit Polyolefinen, Olefincopolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Geeignete Polyester leiten sich von Dicarbonsäuren und Dialkoholen und/oder von Hydroxycarbonsäuren oder den entsprechenden Lactonen ab, wie Polyethylenterephthalat, Polybutylenterephthalat (®Celanex 2500, ®Celanex 2002, Fa Celanese; ®Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugte Additive zu den erfindungsgemäßen Flammschutzmitteln sind Antioxidantien wie aromatische Amine, sterisch gehinderte Phenole (Butyliertes Hydroxotoluol (BHT)), Thiobisphenol, höhermolekulare Polyphenole, Tetrakis(methylen[2,5-di-tert-butyl-4-hydroxyhydrocinnamat])methan (®Irganox 1010), Octadecyl-3,5-di-tert-butyl-4-hydroxyhydrocinnamat (®Irganox 1076), Organophosphite (Tris(nonylphenyl)phosphit (TNPP)), Thioester (Distearyl-3,3'-thiodipropionate, Di-tridecyl-3,3'-thiodipropionat, Dilauryl-3,3'-thiodipropionat), Metalldeaktivatoren (®Irganox 1024), Vitamin E (alpha-Tocopherol), Lacton, Hydroxylamin

Bevorzugte Additive zu den erfindungsgemäßen Flammschutzmitteln sind Antistatica wie Fettsäureester (Glycerin, Polyethylenglykolester, Sorbitolester), quaternäre Ammoniumverbindungen, Ethoxylierte Amine, Alkylsulfonate.

Bevorzugte Additive zu den erfindungsgemäßen Flammschutzmitteln sind Treibmittel wie Azodicarbonamid, p,p-Oxybis(benzolsulfonylhydrazid) (OBSH), 5-Phenyltetrazol (5PT), p-Toluolsulfonylsemicarbazid (TSSC), Trihydrazintriazin (THT).

Bevorzugte Additive zu den erfindungsgemäßen Flammschutzmitteln sind Flammschutzmittel wie Aluminiumtrihydrat, Antimonoxid, bromierte aromatische oder cycloaliphatische Kohlenwasserstoffe, Phenole, Ether, Chlorparaffin, Hexachlorocyclopentadien-Adducte (Dechloran Plus, Occidental Chemical Co), Roter Phosphor, Melaminderivate, Melamincyanurate, Ammoniumpolyphosphate, Magnesiumhydroxid.

Bevorzugte Additive zu den erfindungsgemäßen Flammschutzmitteln sind Hitzestabilisatoren wie Bleistabilisatoren dibasisches Bleiphthalat, Dibasisches Bleistearat, Bleisilicat, Monobasisches und tribasisches Bleisulfat, Dibasisches Bleicarbonat, Dibasisches Bleiphosphit), Gemischt-Metall-Salze (Barium-Cadmium-Salze von, Barium-Zink-Salze und Calcium-Zink-Salze von 2-Ethylhexylcarbonsäure, Searinsäure, Ricinoleinsäure und/oder Laurinsäure bzw. substituierte Phenole, Organozinn-Stabilisatoren (Mono- und Dialkylzinnmercaptide, (Thioglycolate), Dialkylzinncarboxylate (Maleate, Laurate, Zinnester), Sekundäre Hitzestabilisatoren (Alkyl-/Aryl-organophosphite, Epoxyverbindungen ungesättigter Fettsäuren und Fettsäureester).

Bevorzugte Additive zu den erfindungsgemäßen Flammschutzmitteln sind Schlagzähmodifikatoren/Prozesshilfsmittel wie Acrylate, Acrylnitril-Butadien-Styrol (ABS), Chloriertes Polyethylen (CPE), Ethylen-Propylen Terpolymer (EPT), EthylenVinylacetat (EVA), Methacrylat-Butadien-Styrol (MBS).

Bevorzugte Additive zu den erfindungsgemäßen Flammschutzmitteln sind Gleitmittel wie Fettsäureamide (Fettsäuremonoamide, Fettsäurebisamide, Oleamide, Erucamide, Ethylen-bis-stearamid (EBSA), Ethylen-bis-oleamid (EB-

SA)), Fettsäuren-/Fettsäureester ($C_{16}$-$C_{18}$ (Palmfettsäure, Stearinsäure, Ölsäure)), Fettsäurealkohole (Cetylalkohol, Stearylalkohol), Wachse (Paraffinwachse, Polyethylenwachse), Metallstearate (Calciumstearat, Zinkstearat, Magnesiumstearat, Bariumstearat, Aluminiumstearat, Cadmiumstearat, Bleistearat).

Bevorzugte Additive zu den erfindungsgemäßen Flammschutzmitteln sind Lichtschutzmittel wie UV-Absorber (alkylsubstituierte Hydroxybenzophenone z.B. 2-Hydroxy-4-Alkoxybenzophenone, alkylsubstituierte Hydroxybenzothiazole z.B. 2-Hydroxy-3,5-dialkylbenzotriazole), UV-Quencher (Nickel- und Zink diethyldithiocarbamat, n-Butylamin-Nikkel-2,2'-thiobis-(4-t-octylphenolat), Nickel-bis(3,5-di-t-butyl-4-hydroxybenzyl)phosphonsäure monoethylester), Radikalinhibitoren (Bis-(2,2',6,6'-tetramethyl-4-piperidyl)sebacat (HALS)), Hydroperoxidzersetzer (Dithiophosphate).

Bevorzugt sind weiterhin Antidrippingmittel, Compatibilizer, Füllstoffe, Verstärkungsstoffe, Keimbildungsmittel, Nukleierungsmittel, Additive zur Lasermarkierung, Hydrolysestabilisatoren, Kettenverlängerer, Farbpigmente, Weichmacher und Plastifizierungsmittel

Die erfindungsgemäßen Mischungen werden bevorzugt in Formmassen angewendet, die weiter zur Erzeugung von Polymer-Formkörpern eingesetzt werden. Bevorzugtes Verfahren zur Herstellung von Polymer-Formkörpern ist das Spritzgießen.

Die Erfindung wird durch die nachstehenden Beispiele erläutert.

Beispiel 1

636 g (6 mol) Natriumhypophosphit-Monohydrat wurden in 860 g Wasser gelöst in einem Druckreaktor (Glasautoklaven) vorgelegt. Bei Normaldruck wurde innerhalb von 2 h bei 65-80°C aus verschiedenen Vorlagen 432 g (6 mol) Acrylsäure und 73,4 g einer 7 %igen Wasserstoffperoxid-Lösung (2,5 Mol-% bzgl. Acrylsäure) zugetropft. Anschließend wurden bei 80-105°C über ein auf 3 bar eingestellten Reduzierventils Ethylen bis zur Sättigung in den Reaktor eingeleitet. Über einen Zeitraum von 6 h wurde unter ständigem Rühren (Energieeintrag von 0,8 $kW/m^3$) bei einem Ethylendruck von 2.5-2.9 bar und einer Temperatur von 80-105°C 73.4 g einer 7 %igen Wasserstoffperoxid-Lösung (2.5 Mol-% bzgl. Ethylen) gleichmäßig zudosiert.

Nach einer Nachreaktionszeit von 1 h wurde entspannt und das Reaktionsgemisch mit ca. 660 g 50 %ige Natriumhydroxid-Lösung neutralisiert (pH 7). Bei 90°C wurde innerhalb von 1 h eine Mischung von 2596 g (4.02 mol Aluminium) einer 46 %igen wässrigen Lösung von $Al_2(SO_4)_3 \cdot 14\ H_2O$ und 15.0 g 98 %ige $H_2SO_4$ (2,5 Mol-% bzgl. P-Gehalt) zugefügt. Anschließend wurde der erhaltene Feststoff abfiltriert, mit 2 l heißem Wasser gewaschen und bei 130°C im Vakuum getrocknet. Ausbeute: 765 g (70 % der Theorie) 3-(Ethylhydroxyphosphinyl)-Propionsäure-Aluminium(III)salz als farbloses Salz; Chlorgehalt: < 0.1 ppm.

Beispiel 2

636 g (6 mol) Natriumhypophosphit-Monohydrat wurden in 860 g Wasser gelöst in einem Druckreaktor (Glasautoklaven) vorgelegt. Bei Normaldruck wurde innerhalb von 2 h bei 65-80°C aus verschiedenen Vorlagen 432 g (6 mol). Acrylsäure und 428,4 g einer 5 %igen Natriumperoxodisulfat-Lösung (1,5 Mol-% bzgl. Acrylsäure) zugetropft. Anschließend wurden bei 80-105°C- über ein auf 3 bar eingestellten Reduzierventils Ethylen bis zur Sättigung in den Reaktor eingeleitet. Über einen Zeitraum von 6 h wurde unter ständigem Rühren (Energieeintrag von 0,8 $kW/m^3$) bei einem Ethylendruck von 2.5-2.9 bar und einer Temperatur von 80-105°C 428.4 g einer 5 %igen Natriumperoxodisulfat-Lösung (1,5 Mol-% bzgl. Ethylen) gleichmäßig zudosiert.

Nach einer Nachreaktionszeit von 1 h wurde das Reaktionsgemisch mit ca. 330 g 50 %ige Natriumhydroxid-Lösung neutralisiert (pH 7). Bei 80°C wurde innerhalb von 2 h 4184 g (7,8 mol Calcium) einer 44%-igen wässrigen Lösung von $Ca(NO_3)_2 \cdot 4\ H_2O$ zugefügt. Anschließend wurde der erhaltene Feststoff abfiltriert, mit 2 l heißem Wasser gewaschen und bei 130°C im Vakuum getrocknet. Ausbeute: 820 g (67 % der Theorie) 3-(Ethylhydroxyphosphinyl)-Propionsäure-Calcium(II)salz als farbloses Salz; Chlorgehalt: < 0.1 ppm.

Beispiel 3

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestellten Reduzierventils Ethylen bis zur Sättigung in den Reaktor eingeleitet. Über einen Zeitraum von 4 h wurde unter ständigem Rühren bei einem Ethylendruck von 2.5-2.9 bar und einer Temperatur von 100-130°C 428.4 g einer 5 %igen Natriumperoxodisulfat-Lösung (1.5 Mol-% bzgl. Ethylen) gleichmäßig zudosiert. Nach Entspannen wurde bei Normaldruck innerhalb von 1 h bei 90-100°C aus verschiedenen Vorlagen 602 g (7 mol) Methacrylsäure und 500 g einer 5 %igen Natriumperoxodisulfat-Lösung (1,5 Mol-% bzgl. Methacrylsäure) zugetropft.

Nach einer Nachreaktionszeit von 1 h wurde das Reaktionsgemisch mit ca. 660 g 50 %ige Natriumhydroxid-Lösung neutralisiert (pH 7). Bei 85°C wurde innerhalb von 1,2 h eine Mischung von 2596 g (4.02 mol Aluminium) einer 46 %igen

wässrigen Lösung von $Al_2(SO_4)_3 \cdot 14\ H_2O$ und 15.0 g 98 %ige $H_2SO_4$ (2,5 Mol-% bzgl. P-Gehalt) zugefügt. Anschließend wurde der erhaltene Feststoff abfiltriert, mit 2 l heißem Wasser gewaschen und bei 130°C im Vakuum getrocknet. Ausbeute: 614 g (52 % der Theorie) 3-(Ethylhydroxyphosphinyl)-2-methyl-Propionsäure-Aluminium(III)salz als farbloses Salz; Chlorgehalt: < 0.1 ppm.

Beispiel 4

Analog Beispiel 3 wurden 636 g (6 mol) Natriumhypophosphit-Monohydrat wurden in 860 g Wasser gelöst in einem Druckreaktor (Glasautoklaven) mit Ethylen in Gegenwart von 428.4 g einer 5 %igen Natriumperoxodisulfat-Lösung (1.5 Mol-% bzgl. Ethylen) umgesetzt. Nach Entspannen wurde bei Normaldruck innerhalb von 1 h bei 90-100°C aus verschiedenen Vorlagen 432 g (6 mol) Acrylsäure und 428,4 g einer 5 %igen Natriumperoxodisulfat-Lösung (1,5 Mol-% bzgl. Acrylsäure) zugetropft. Nach einer Nachreaktionszeit von 1 h wurde das Reaktionsgemisch mit ca. 660 g 50 %ige Natriumhydroxid-Lösung neutralisiert (pH 7). Bei 100°C wurde innerhalb von 0,8 h eine Mischung von 4363 g (4.02 mol Cer) einer 40 %igen wässrigen Lösung von $Ce(NO_3)_3 \cdot 6\ H_2O$ und 15,0 g 98 %ige $H_2SO_4$ (2,5 Mol-% bzgl. P-Gehalt) zugefügt. Anschließend wurde der erhaltene Feststoff abfiltriert, mit 2 l heißem Wasser gewaschen und bei 130°C im Vakuum getrocknet. Ausbeute: 1006 g (65 % der Theorie) 3-(Ethylhydroxyphosphinyl)-Propionsäure-Cer(III)salz als farbloses Salz; Chlorgehalt: < 0.1 ppm.

Beispiel 5

Es wurden 636 g (6 mol) Natriumhypophosphit-Monohydrat und 15 g konzentrierte Schwefelsäure in 860 g Wasser gelöst in einem Druckreaktor (Glasautoklaven) vorgelegt. Nach Aufheizen der Reaktionsmischung auf 120°C wurde über ein auf 3 bar eingestellten Reduzierventils Propylen bis zur Sättigung in den Reaktor eingeleitet. Über einen Zeitraum von 2 h wurde unter ständigem Rühren (Energieeintrag von 1,1 $kW/m^3$) bei einem Propylendruck von 2.5-2.9 bar und einer Temperatur von 120-140°C 214 g einer 5%igen Natriumperoxodisulfat-Lösung (1,5 Mol-% bzgl. Propylen) mit Propylen umgesetzt. Dann wurde es mit 516,5 g (6 mol) Acrylsäuremethylester in Gegenwart von 428 g einer 5 %igen Natriumperoxodisulfat-Lösung (1.5 Mol-% bzgl. Acrylsäuremethylester) versetzt, bevor nochmals Propylen in Gegenwart von 214 g einer 5 %igen Natriumperoxodisulfat-Lösung zugegeben wurde.
Nach einer Nachreaktionszeit von 1 h wurde das Reaktionsgemisch mit ca. 330 g 50%ige Natriumhydroxid-Lösung neutralisiert (pH 7). Bei 90°C wurde innerhalb von 1 h eine Mischung von 2388 g (2.01 mol Aluminium) einer 25 %igen wässrigen Lösung von $Al_2(SO_4)_3 \cdot 14\ H_2O$ und 15.0 g 98%ige $H_2SO_4$ (2,5 Mol-% bzgl. P-Gehalt) zugefügt. Anschließend wurde der erhaltene Feststoff abfiltriert, mit 2 l heißem Wasser gewaschen und bei 130°C im Vakuum getrocknet. Ausbeute: 824 g (68 % der Theorie) 3-(Propylhydroxyphosphinyl)-Propionsäure-methylester-Aluminium(III)salz als farbloses Salz; Chlorgehalt: < 0.1 ppm.

Beispiel 6

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestellten Reduzierventil Ethylen bis zur Sättigung in den Reaktor eingeleitet. Über einen Zeitraum von 4 h wurde unter ständigem Rühren bei einem Ethylendruck von 2.5-2.9 bar und einer Temperatur von 100-130°C eine Lösung von 428.4 g einer 5 %igen Natriumperoxodisulfat-Lösung (1.5 Mol-% bzgl. Ethylen) gleichmäßig zudosiert. Nach Entspannen wurde bei Normaldruck innerhalb von 1 h bei 90-100°C aus verschiedenen Vorlagen 216 g (3 mol) Acrylsäure und 214.2 g einer 5 %igen Natriumperoxodisulfat-Lösung (1.5 Mol-% bzgl. Acrylsäure) zugetropft.
Die beiden Schritte wurden bei entsprechenden Temperaturen wiederholt, in dem wieder ein Ethylendruck von 2.5-2.9 bar eingestellt wurde und für 2 h nun 214.2 g einer 5 %igen Natriumperoxodisulfat-Lösung dosiert wurden. Danach wurde das Reaktionsgemisch wieder mit 216 g (3 mol) Acrylsäure in Gegenwart von 214.2 g einer 5 %igen Natriumperoxodisulfat-Lösung versetzt.
Nach einer Nachreaktionszeit von 1 h wurde das Reaktionsgemisch mit ca. 660 g 50 %ige Natriumhydroxid-Lösung neutralisiert (pH 7). Bei 95°C wurde innerhalb von 2,5h eine Mischung von 5120 g (6 mol Zink) einer 40 %igen wässrigen Lösung von $ZnSO_4 \cdot 7\ H_2O$ und 15.0 g 98%ige $H_2SO_4$ (2,5 Mol-% bzgl. P-Gehalt) zugefügt. Anschließend wurde der erhaltene Feststoff abfiltriert, mit 2 l heißem Wasser gewaschen und bei 130°C im Vakuum getrocknet. Ausbeute: 995 g (72 % der Theorie) 3-(Ethylhydroxyphosphinyl)-Propionsäure-Zink(II)salz als farbloses Salz; Chlorgehalt: < 0.1 ppm.

Beispiel 7

Analog zu Beispiel 6 wurden 636 g (6 mol) Natriumhypophosphit-Monohydrat mit Ethylen und Acrylsäure umgesetzt. Nach einer Nachreaktionszeit von 1 h wurde das Reaktionsgemisch mit ca. 660 g 50 %ige Natriumhydroxid-Lösung neutralisiert (pH 7). Bei 75°C wurde innerhalb von 2 h 3218 g (6 mol Calcium) einer 44 %igen wässrigen Lösung von $Ca(NO_3)_2.4\ H_2O$ zugefügt. Anschließend wurde der erhaltene Feststoff abfiltriert, mit 21 heißem Wasser gewaschen und bei 130°C im Vakuum getrocknet. Ausbeute: 857 g (72 % der Theorie) 3-(Ethylhydroxyphosphinyl)-Propionsäure-Calcium(II)salz als farbloses Salz; Chlorgehalt: < 0.1 ppm.

Beispiel 8

792 g einer 50 %igen wässrigen Lösung von hypophosphoriger Säure (6 mol) wurden mit 261 g (4,5 mol) Aceton und 588 g (3 mol) 50 %ige Schwefelsäure versetzt und das Reaktionsgemisch 8 h unter Rückfluss erhitzt. Nach Abkühlen wurde das Reaktionsgemisch unter Eiskühlung mit Natronlauge neutralisiert und das Lösungsmittel im Vakuum abdestilliert. Der Rückstand wurde mit Ethanol aufgenommen und die unlöslichen Salze abfiltriert. Das Lösungsmittel des Filtrats wurde im Vakuum entfernt. Es wurden 677 g (91 % der Theorie) 1-Hydroxy-1-methylethylphosphinat erhalten.

Beispiel 9

744 g (6 mol) 1-Hydroxy-1-methylethylphosphinat wurden gelöst in 840 ml Wasser in vorgelegt, bevor innerhalb von 2,5 h bei 95-100°C aus verschiedenen Vorlage 432 g (6 mol) Acrylsäure und 428 g einer 5 %igen Natriumperoxodisulfat-Lösung (1.5 Mol-% bzgl. Acrylsäure) zugetropft wurde. Anschließend wurde das Wasser im Vakuum abdestilliert. Das Aceton wurde im Vakuum bei 120-160°C thermolytisch abgespalten und in einer Kühlfalle aufgefangen. Das im Sumpf befindlichen Produkt wurde mit 800 ml Wasser aufgenommen. In einem Druckreaktor wurde das Reaktionsgemisch auf 115°C aufgeheizt und dann über ein auf 3 bar eingestelltes Reduzierventil Ethylen bis zur Sättigung in den Reaktor eingeleitet. Über einen Zeitraum von 5 h wurde unter ständigem Rühren bei einem Ethylendruck von 2,5-2,9 bar und einer Temperatur von 100-115°C eine Lösung von 428 g einer 5 %igen Natriumperoxodisulfat-Lösung (1.5 Mol-% bzgl. Ethylen) gleichmäßig zudosiert. Nach einer Nachreaktionszeit von 1 h wurde das Reaktionsgemisch mit ca. 660 g 50 %ige Natriumhydroxid-Lösung neutralisiert (pH 7). Bei 85°C wurde innerhalb von 1,2 h eine Mischung von 2596 g (4.02 mol Aluminium) einer 46 %igen wässrigen Lösung von $Al_2(SO_4)_3 \cdot 14\ H_2O$ und 15.0 g 98%ige $H_2SO_4$ (2,5 Mol-% bzgl. P-Gehalt) zugefügt. Anschließend wurde der erhaltene Feststoff abfiltriert, mit 2 l heißem Wasser gewaschen und bei 130°C im Vakuum getrocknet. Ausbeute: 819 g (75 % der Theorie) 3-(Ethylhydroxyphosphinyl)-Propionsäure-Aluminium(III)salz als farbloses Salz; Chlorgehalt: < 0.1 ppm.

## Patentansprüche

1. Mischungen aus Mono-Carboxylfunktionalisierten DialkylphosphinsäureSalzen und weiteren Komponenten, **dadurch gekennzeichnet, dass** sie

   A) 98 bis 100 Gew.-% Mono-Carboxylfunktionalisierte Dialkylphosphinsäure-Salze der Formel (I)

   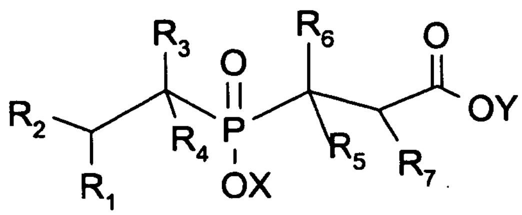

   (I)

   in der X und Y verschieden sind wobei X Ca, Al oder Zn und Y Methyl, Ethyl, n-Propyl, Isopropyl, n-Butyl, Isobutyl, tert. Butyl, Phenyl, 2-Hydroxyethyl, 2,3-Dihydroxypropyl, 2-Hydroxypropyl, 3-Hydroxypropyl, 4-Hydroxybutyl, 3-Hydroxybutyl, 2-Hydroxybutyl und/oder 6-Hydroxyhexyl, Allyl und/oder Glycerin bedeutet; oder X und Y verschieden sind und Mg, Sb, Sn, Ge, Ti, Fe, Zr, Ce, Bi, Sr, Mn, Cu, Ni, Li, Na, K und/oder H bedeuten;
   oder X und Y gleich oder verschieden sind und dann jeweils Ca, Al oder Zn bedeuten;
   $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, tert. Butyl und/oder Phenyl bedeuten und
   B) 0 bis 2 Gew.-% Halogene enthalten,

   wobei die Summe der Komponenten immer 100 Gew.-% beträgt.

**2.** Mischungen nach Anspruch 1, **dadurch gekennzeichnet, dass** sie 99,9995 bis 100 Gew.-% Mono-Carboxylfunktionalisierte Dialkylphosphinsäure-Salze der Formel (I) und 0 bis 0,0005 Gew.-% Halogene enthalten.

**3.** Mischungen nach Anspruch 1 oder 2, **dadurch gekennzeichnet, dass** es sich bei dem Mono-Carboxylfunktionalisierten Dialkylphosphinsäure-Salz um 3-(Ethylhydroxyphosphinyl)-Propionsäure-Aluminium(III)salz, 3-(Ethylhydroxyphosphinyl)-Propionsäure-Calcium(II)salz, 3-(Ethylhydroxyphosphinyl)-Propionsäure-Cer(III)salz, 3-(Ethylhydroxyphosphinyl)-Propionsäure-Zink(II)salz, 3-(Ethylhydroxyphosphinyl)-2-methyl-Propionsäure-Aluminium(III) salz, 3-(Propylhydroxyphosphinyl)-Propionsäure-methylester-Aluminium(III)salz, 3-(Propylhydroxy-phosphinyl)-propionsäure-Aluminium(III)salz, 3-(Propylhydroxy-phosphinyl)-propionsäure-Zink(II)salz, 3-(Ethylhydroxy-phosphinyl)-Buttersäure- Aluminium(III)salz, 3-(Ethylhydroxyphosphinyl)-Buttersäure- Zink(II)salz, 3-(Propylhydroxy-phosphinyl)-Buttersäure- Aluminium(III)salz, 3-(Ethylhydroxy-phosphinyl)-Pentansäure- Aluminium(III)salz, 3-(Propylhydroxy-phosphinyl)-2-methyl-Propionsäure-Aluminium(III)salz, 3-(Ethylhydroxy-phosphinyl)-2-methyl-Buttersäure-Aluminium(III)salz, 3-(Ethylhydroxyphosphinyl)-Propionsäuremethylester-Aluminium(III)salz, 3-(Ethylhydroxyphosphinyl)-Propionsäure-(2-hydroxyethyl)-ester-Aluminium(III)salz, 3-(Ethylhydroxyphosphinyl)-Propionsäure-(2-hydroxyethyl)-ester-Zink(II)salz, 3-(Ethylhydroxyphosphinyl)-Propionsäure-(2,3-dihydroxypropyl)-ester Aluminium(III)salz und/oder 3-(Ethylhydroxyphosphinyl)-2-methyl-Propionsäureallylester-Aluminium(III)salz handelt.

**4.** Verfahren zur Herstellung von Mischungen nach einem oder mehreren der Ansprüche 1 bis 3, **dadurch gekennzeichnet, dass** man in einer Verfahrensstufe 1 hypophosphorige Säure oder deren Salze (Komponente C) der Formel II

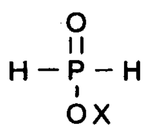

II

in der X H, Na, K oder $NH_4$ bedeutet; in Gegenwart eines radikalischen Initiators mit einem $\alpha,\beta$-ungesättigten Carbonsäurederivat (Komponente D) der Formel III

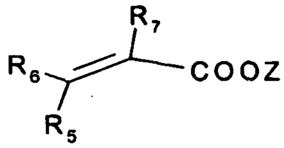

III

in der $R_5$, $R_6$, $R_7$ die gleiche Bedeutung wie in Formel I aufweisen und Z
H, $C_{1-18}$-Alkyl oder $C_{6-18}$-Aryl bedeutet oder für Y steht; und mit einem Olefin (Komponente E) der Formel IV

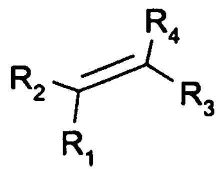

IV

in der $R_1$, $R_2$, $R_3$, $R_4$ die gleiche Bedeutung wie in Formel I aufweise, umsetzt und in einer Verfahrensstufe 2 die so erhaltene Mono-Carboxylfunktionalisierte Dialkylphosphinsäure und/oder deren Alkalisalze mit Metallverbindungen von Mg, Ca, Al, Sb, Sn, Ge, Ti, Fe, Zr, Zn, Ce, Bi, Sr und/oder Mn zu den Dialkylphosphinsäuresalzen dieser Metalle und/oder der Stickstoffverbindung nach Formel I umsetzt.

5. Verfahren nach Anspruch 4, **dadurch gekennzeichnet, dass** X H und Z H, Methyl, Ethyl, n-Propyl, Isopropyl, n-Butyl, Isobutyl, tert. Butyl, Hydroxyethyl oder Hydroxypropyl bedeutet.

6. Verfahren nach Anspruch 4 oder 5, **dadurch gekennzeichnet, dass** in Verfahrensstufe 1 in einem Schritt 1 die Komponente C in Gegenwart eines radikalischen Initiators mit Komponente E zu einer Alkylphosphonigen Säure umgesetzt wird und in Schritt 2 die resultierende Reaktionslösung mit einem Alkohol verestert wird und dabei entstehende Phosphonigsäureester destillativ abgetrennt wird und dann in einem Schritt 3 in Gegenwart eines radikalischen oder eines basischen Initiators mit Komponente D umgesetzt wird und daran anschließend die Verfahrensstufe 2 ausgeführt wird.

7. Verfahren nach Anspruch 6, **dadurch gekennzeichnet, dass** im Schritt 2 die alkylphosphonige Säure mit einem linearen oder verzweigten Alkohol der allgemeinen Formel M-OH, wobei M für einen linearen oder verzweigten Alkylrest mit 1 bis 10 Kohlenstoffatomen steht, direkt verestert wird.

8. Verfahren nach Anspruch 7, **dadurch gekennzeichnet, dass** es sich bei dem Alkohol um n-Butanol, Iso-Butanol oder Ethylhexanol handelt.

9. Verfahren nach einem oder mehreren der Ansprüche 6 bis 8, **dadurch gekennzeichnet, dass** es sich bei der Komponente C um das Ammonium- oder Natriumsalz der Hypophosphorigen Säure handelt.

10. Verfahren nach einem oder mehreren der Ansprüche 4 bis 9, **dadurch gekennzeichnet, dass** es sich bei dem Initiator um einen radikalischen, anionischen, kationischen oder photochemischen Initiator handelt.

11. Verfahren nach einem oder mehreren der Ansprüche 4 bis 10, **dadurch gekennzeichnet, dass** es sich bei dem Initiator um Peroxide bildende Verbindungen und/oder Peroxoverbindungen wie Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azoverbindungen wie Azodüsobutyronitril, 2,2'-Azobis(2-amidinopropan)-dihydrochlorid und/oder 2,2'-Azobis(N,N'-dimethylen-isobutyramidin)-dihydrochlorid handelt.

12. Verfahren nach einem oder mehreren der Ansprüche 4 bis11, **dadurch gekennzeichnet, dass** es sich bei den α, β-ungesättigten Carbonsäuren und α,β-ungesättigten Carbonsäurederivaten um Acrylsäure, Acrylsäuremethylester, Acrylsäureethylester, Methacrylsäure, Acrylsäurehydroxyethylester, Crotonsäure, Crotonsäureethylester, Tiglinsäure (trans 2,3-Dimethylacryl-säure), (trans-)2-Pentensäure, Furan-2-carbonsäure und/oder Thiophen-2-carbonsäure handelt.

13. Verfahren nach einem oder mehreren der Ansprüche 4 bis 12, **dadurch gekennzeichnet, dass** es sich bei dem Olefin (Komponente E) um Ethylen, Propylen oder beliebige Gemische davon, 1-Hexen, 1-Hepten und/oder 1-Octen oder um Allylalkohol, Allylamin, Allyl-benzol, Allylanisol, Styrol, α-Methylstyrol, 4-Methylstyrol und/oder Vinylacetat handelt.

14. Verfahren nach einem oder mehreren der Ansprüche 4 bis 13, **dadurch gekennzeichnet, dass** die Umsetzung der Komponente C mit den Komponenten D und/oder E bei einer Temperatur von 50 bis 150°C erfolgt.

15. Verfahren zur Herstellung von Mischungen nach einem oder mehreren der Ansprüche 1 bis 3, **dadurch gekennzeichnet, dass** man in Verfahrensstufe 1 die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente D umsetzt, dann in einem Schritt 3 das Keton abtrennt und in einem Schritt 4 das resultierende Reaktionsgemisch in Gegenwart eines radikalischen Initiators mit der Komponente E umsetzt und anschließend die Verfahrensstufe 2 ausführt.

16. Verfahren zur Herstellung von Mischungen nach einem oder mehreren der Ansprüche 1 bis 3, **dadurch gekennzeichnet, dass** man in Verfahrensstufe 1 die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente E umsetzt, dann in einem Schritt 3 das Keton abtrennt und in einem Schritt 4 das resultierende Reaktionsgemisch in Gegenwart eines radikalischen Initiators mit der Komponente D umsetzt und anschließend die Verfahrensstufe 2 ausführt.

**17.** Verfahren nach einem oder mehreren der Ansprüche 4 bis 16, **dadurch gekennzeichnet, dass** es sich bei den Metallverbindungen der Verfahrensstufe 2 um Aluminiumhydroxid, Aluminiumsulfate, Zinksulfat-Heptahydrat, Magnesiumchlorid-Hexahydrat, und/oder Calciumchlorid-Dihydrat handelt.

**18.** Verfahren nach einem oder mehreren der Ansprüche 4 bis 17, **dadurch gekennzeichnet, dass** die Umsetzung in der Verfahrensstufe 2 bei einer Temperatur von 20 bis 150°C erfolgt.

**19.** Verwendung von Mischungen nach einem oder mehreren der Ansprüche 1 bis 3 als Flammschutzmittel, zur Herstellung von Flammschutzmitteln, in flammgeschützten Formmassen oder in flammgeschützten Polymer-Formkörpern, -Filmen, -Fäden und -Fasern.

**20.** Verwendung nach Anspruch 19, **dadurch gekennzeichnet, dass** die flammgeschützte Formmasse oder die Polymer-Formkörper, -Filme, -Fäden und- Fasern 1 bis 50 Gew.-% der Mischungen nach einem oder mehreren der Ansprüche 1 bis 3, 1 bis 99 Gew.-% Polymer oder Mischungen derselben, 0 bis 60 Gew.-% Additive und 0 bis 60 Gew.-% Füllstoff enthält, wobei die Summe der Komponenten immer 100 Gew.-% beträgt.

## Claims

**1.** A mixture composed of monocarboxy-functionalized dialkylphosphinic salts and of further components, which comprises

A) from 98 to 100% by weight of monocarboxy-functionalized dialkylphosphinic salts of the formula (I)

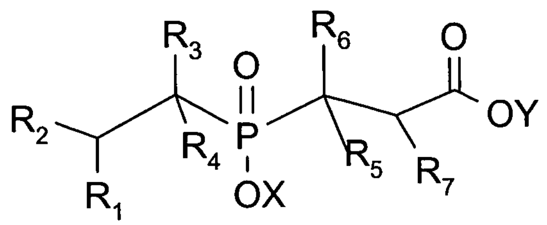

(I)

in which X and Y are different, where X is Ca, Al, or Zn, and Y is methyl, ethyl, n-propyl, isopropyl, n-butyl, isobutyl, tert-butyl, phenyl, 2-hydroxyethyl, 2,3-dihydroxypropyl, 2-hydroxypropyl, 3-hydroxypropyl, 4-hydroxybutyl, 3-hydroxybutyl, 2-hydroxybutyl, and/or 6-hydroxyhexyl, allyl and/or glycerol;
or X and Y are different and are Mg, Sb, Sn, Ge, Ti, Fe, Zr, Ce, Bi, Sr, Mn, Cu, Ni, Li, Na, K and/or H;
or X and Y are identical or different and each is then Ca, Al, or Zn;
$R_1$, $R_2$, $R_3$, $R_4$, $R_5$, $R_6$, and $R_7$ are identical or different and, independently of one another, are H, methyl, ethyl, n-propyl, isopropyl, tert-butyl, and/or phenyl, and
B) from 0 to 2% by weight of halogens,

where the entirety of the components always amounts to 100% by weight.

**2.** The mixture as claimed in claim 1, which comprises from 99.9995 to 100% by weight of monocarboxy-functionalized dialkylphosphinic salts of the formula (I) and from 0 to 0.0005% by weight of halogens.

**3.** The mixture as claimed in claim 1 or 2, wherein the monocarboxy-functionalized dialkylphosphinic salt is aluminum (III) 3-(ethylhydroxyphosphinyl)-propionate, calcium(II) 3-(ethylhydroxyphosphinyl)propionate, cerium(III) 3-(ethylhydroxyphosphinyl)propionate, zinc(II) 3-(ethylhydroxyphosphinyl)propionate, aluminum(III) 3-(ethylhydroxyphosphinyl)-2-methylpropionate, the methyl ester of aluminum(III) 3-(propylhydroxyphosphinyl)propionate, aluminum(III) 3-(propylhydroxyphosphinyl)propionate, zinc(II) 3-(propylhydroxyphosphinyl)propionate, aluminum(III) 3-(ethylhydroxyphosphinyl)butyrate, zinc(II) 3-(ethylhydroxyphosphinyl)butyrate, aluminum(III) 3-(propylhydroxyphosphinyl) butyrate, aluminum(III) 3-(ethylhydroxyphosphinyl)pentanoate, aluminum(III) 3-(propylhydroxyphosphinyl)-2-methylpropionate, aluminum(III) 3-(ethylhydroxyphosphinyl)-2-methylbutyrate, the methyl ester of aluminum(III) 3-(ethylhydroxyphosphinyl)propionate, the 2-hydroxyethyl ester of aluminum(III) 3-(ethylhydroxyphosphinyl)propionate, the 2-hydroxyethyl ester of zinc(II) 3-(ethylhydroxyphosphinyl)propionate, the 2,3-dihydroxypropyl ester of aluminum (III) 3-(ethylhydroxyphosphinyl)propionate and/or the allyl ester of aluminum(III) 3-(ethylhydroxyphosphinyl)-2-methylpropionate.

**4.** A process for preparation of mixtures as claimed in one or more of claims 1 to 3, which comprises reacting, in a stage 1 of the process, hypophosphorous acid or its salts (component C) of the formula II

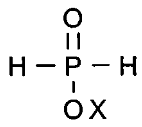

II

in which X is H, Na, K, or $NH_4$; in the presence of a free-radical initiator with an $\alpha,\beta$-unsaturated carboxylic acid derivative (component D) of the formula III

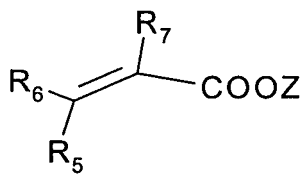

III

in which $R_5$, $R_6$, and $R_7$ are defined as in formula I, and Z is H, $C_{1-18}$-alkyl, or $C_{6-18}$-aryl, or is Y; and with an olefin (component E) of the formula IV

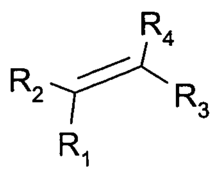

IV

in which $R_1$, $R_2$, $R_3$, and $R_4$ are defined as in formula I and, in a stage 2 of the process, reacting the resultant monocarboxy-functionalized dialkylphosphinic acid and/or its alkali metal salts with metal compounds of Mg, Ca, Al, Sb, Sn, Ge, Ti, Fe, Zr, Zn, Ce, Bi, Sr and/or Mn to give the dialkylphosphinates of these metals and/or to give the nitrogen compound of formula I.

**5.** The process as claimed in claim 4, wherein X is H and Z is H, methyl, ethyl, n-propyl, isopropyl, n-butyl, isobutyl, tert-butyl, hydroxyethyl, or hydroxypropyl.

**6.** The process as claimed in claim 4 or 5, wherein, in stage 1 of the process, in a step 1, component C is reacted in the presence of a free-radical initiator with component E to give an alkylphosphonous acid and, in step 2, the resultant reaction solution is esterified with an alcohol and phosphonous ester produced here is removed by distillation and then, in a step 3, is reacted in the presence of a free-radical initiator or of a basic initiator with component D, and then stage 2 of the process is carried out.

**7.** The process as claimed in claim 6, wherein, in step 2, the alkylphosphonous acid is directly esterified with a linear

or branched alcohol of the formula M-OH, where M is a linear or branched alkyl radical having from 1 to 10 carbon atoms.

**8.** The process as claimed in claim 7, wherein the alcohol is n-butanol, isobutanol, or ethylhexanol.

**9.** The process as claimed in one or more of claims 6 to 8, wherein component C is the ammonium or sodium salt of hypophosphorous acid.

**10.** The process as claimed in one or more of claims 4 to 9, wherein the initiator is a free-radical, anionic, cationic, or photochemical initiator.

**11.** The process as claimed in one or more of claims 4 to 10, wherein the initiator is peroxide-forming compounds and/or peroxo compounds, e.g. hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-tert-butyl peroxide, and/or peroxodisulfuric acid, and/or is azo compounds, e.g. azodiisobutyronitrile, 2,2'-azobis (2-amidinopropane) dihydrochloride and/or 2,2'-azobis(N,N'-dimethyleneisobutyramidine) dihydrochloride.

**12.** The process as claimed in one or more of claims 4 to 11, wherein the α,β-unsaturated carboxylic acids and α,β-unsaturated carboxylic acid derivatives are acrylic acid, methyl acrylate, ethyl acrylate, methacrylic acid, hydroxyethyl acrylate, crotonic acid, ethyl crotonate, tiglic acid (trans-2,3-dimethylacrylic acid), (trans-)2-pentenoic acid, furan-2-carboxylic acid, and/or thiophene-2-carboxylic acid.

**13.** The process as claimed in one or more of claims 4 to 12, wherein the olefin (component E) is ethylene, propylene or any desired mixture thereof, 1-hexene, 1-heptene, and/or 1-octene, or is allyl alcohol, allylamine, allylbenzene, allylanisole, styrene, α-methylstyrene, 4-methylstyrene, and/or vinyl acetate.

**14.** The process as claimed in one or more of claims 4 to 13, wherein the reaction of component C with components D and/or E takes place at a temperature of from 50 to 150°C.

**15.** A process for preparation of mixtures as claimed in one or more of claims 1 to 3, which comprises, in stage 1 of the process, reacting component C, in a step 1, with a ketone to give 1-hydroxy-1-dialkylphosphinate, reacting this 1-hydroxy-1-dialkylphosphinate, in a step 2, in the presence of a free-radical initiator with component D, then, in a step 3, removing the ketone, and reacting the resultant reaction mixture, in a step 4, in the presence of a free-radical initiator with component E, and then carrying out stage 2 of the process.

**16.** A process for preparation of mixtures as claimed in one or more of claims 1 to 3, which comprises, in stage 1 of the process, reacting component C, in a step 1, with a ketone to give 1-hydroxy-1-dialkylphosphinate, reacting this 1-hydroxy-1-dialkylphosphinate, in a step 2, in the presence of a free-radical initiator with component E, then, in a step 3, removing the ketone, and reacting the resultant reaction mixture, in a step 4, in the presence of a free-radical initiator with component D, and then carrying out stage 2 of the process.

**17.** The process as claimed in one or more of claims 4 to 16, wherein the metal compounds of stage 2 of the process are aluminum hydroxide, aluminum sulfates, zinc sulfate heptahydrate, magnesium chloride hexahydrate, and/or calcium chloride dihydrate.

**18.** The process as claimed in one or more of claims 4 to 17, wherein the reaction in stage 2 of the process takes place at a temperature of from 20 to 150°C.

**19.** The use of mixtures as claimed in one or more of claims 1 to 3 as flame retardants, for preparation of flame retardants, in flame-retardant molding compositions or in flame-retardant polymer moldings, in flame-retardant polymer films, in flame-retardant polymer filaments, and in flame-retardant polymer fibers.

**20.** The use as claimed in claim 19, wherein the flame-retardant molding composition or the polymer moldings, polymer films, polymer filaments, and polymer fibers comprise from 1 to 50% by weight of the mixtures as claimed in one or more of claims 1 to 3, from 1 to 99% by weight of polymer or a mixture of the same, from 0 to 60% by weight of additives, and from 0 to 60% by weight of filler, where the entirety of the components always amounts to 100% by weight.

## Revendications

1. Mélanges de sels d'acides dialkylphosphiniques à fonctionnalisation mono-carboxy et d'autres composants, **caractérisés en ce qu'**ils contiennent

A) 98 à 100 % en poids de sels d'acides dialkylphosphiniques à fonctionnalisation mono-carboxy, de formule (I)

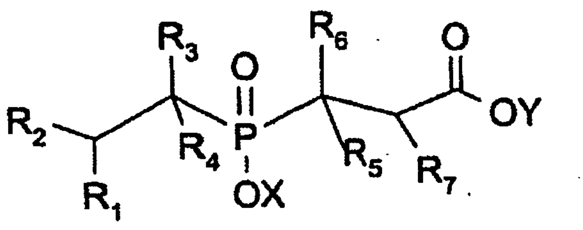

(I)

dans laquelle X et Y sont différents, X représentant Ca, Al ou Zn et Y représentant le groupe méthyle, éthyle, n-propyle, isopropyle, n-butyle, isobutyle, tert-butyle, phényle, 2-hydroxyéthyle, 2,3-dihydroxypropyle, 2-hydroxypropyle, 3-hydroxypropyle, 4-hydroxybutyle, 3-hydroxybutyle, 2-hydroxybutyle et/ou 6-hydroxyhexyle, allyle et/ou le glycérol ;
ou X et Y sont différents et représentent Mg, Sb, Sn, Ge, Ti, Fe, Zr, Ce, Bi, Sr, Mn, Cu, Ni, Li, Na, K et/ou H ;
ou X et Y sont identiques ou différents et représentent alors chacun Ca, Al ou Zn ;
$R_1$, $R_2$, $R_3$, $R_4$, $R_5$, $R_6$, $R_7$ sont identiques ou différents et représentent, indépendamment les uns des autres, H, le groupe méthyle, éthyle, n-propyle, isopropyle, tert-butyle et/ou le groupe phényle et
B) 0 à 2 % en poids d'halogènes,
la somme des composants étant toujours égale à 100 % en poids.

2. Mélanges selon la revendication 1, **caractérisés en ce qu'**ils contiennent de 99,9995 à 100 % en poids de sels d'acides dialkylphosphiniques à fonctionnalisation mono-carboxy de formule (I) et de 0 à 0,0005 % en poids d'halogènes.

3. Mélanges selon la revendication 1 ou 2, **caractérisés en ce que** le sel d'acide dialkylphosphinique à fonctionnalisation mono-carboxy consiste en le sel 3-(éthylhydroxyphosphinyl)-propionate d'aluminium-(III), le sel 3-(éthylhydroxyphosphinyl)-propionate de calcium-(II), le sel 3-(éthylhydroxyphosphinyl)-propionate de cérium-(III), le sel 3-(éthylhydroxyphosphinyl)-propionate de zinc-(II), le sel 3-(éthylhydroxyphosphinyl),-2-méthyl-propionate d'aluminium-(III), le sel d'aluminium-(III) de 3-(propylhydroxyphosphinyl)-propionate de méthyle, le sel 3-(propylhydroxyphosphinyl)-propionate d'aluminium-(III), le sel 3-(propylhydroxyphosphinyl)-propionate de zinc-(II), le sel 3-(éthylhydroxyphosphinyl)-butyrate d'aluminium-(III), le sel 3-(éthylhydroxyphosphinyl)-butyrate de zinc-(II), le sel 3-(propylhydroxyphosphinyl)-butyrate d'aluminium-(III), le sel 3-(éthylhydroxyphosphinyl)-pentanoate d'aluminium-(III), le sel 3-(propylhydroxyphosphinyl)-2-méthyl-propionate d'aluminium-(III), le sel 3-(éthylhydroxyphosphinyl)-2-méthylbutyrate d'aluminium-(III), le sel d'aluminium-(III) de 3-(éthylhydroxyphosphinyl)-propionate de méthyle, le sel d'aluminium-(III) de 3-(éthylhydroxyphosphinyl)-propionate de 2-hydroxyéthyle, le sel de zinc-(II) de 3-(éthylhydroxyphosphinyl)-propionate de 2-hydroxyéthyle, le sel d'aluminium-(III) de 3-(éthylhydroxyphosphinyl)-propionate de 2,3-dihydroxypropyle et/ou le sel d'aluminium-(III) de 3-(éthylhydroxyphosphinyl)-2-méthylpropionate d'allyle.

4. Procédé pour la préparation des mélanges selon une ou plusieurs des revendications 1 à 3, **caractérisé en ce que** dans un premier stade du procédé on fait réagir de l'acide hypophosphoreux ou ses sels (composant C) de formule II

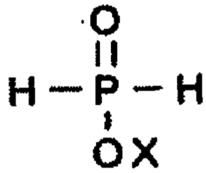

II

dans laquelle X représente H, Na, K ou $NH_4$, en présence d'un amorceur de radicaux, avec un dérivé d'acide carboxylique $\alpha,\beta$-insaturé (composant D) de formule III

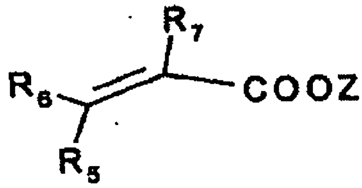

III

dans laquelle $R_5$, $R_6$, $R_7$ ont les mêmes significations que dans la formule I, et Z représente H, un groupe alkyle en $C_1$-$C_{18}$ ou aryle en $C_6$-$C_{18}$ ou Y ; et avec une oléfine (composant E) de formule IV

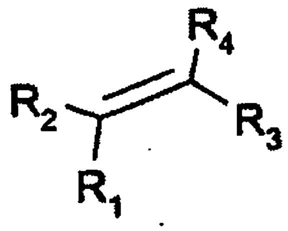

IV

dans laquelle $R_1$, $R_2$, $R_3$, $R_4$ ont les mêmes significations que dans la formule I, et dans un stade 2 du procédé on fait réagir l'acide dialkylphosphinique à fonctionnalisation mono-carboxy ainsi obtenu et/ou ses sels alcalins avec des composés métalliques de Mg, Ca, Al, Sb, Sn, Ge, Ti, Fe, Zr, Zn, Ce, Bi, Sr et/ou Mn, pour obtenir les sels d'acides dialkylphosphiniques de ces métaux et/ou du composé azoté de formule I.

**5.** Procédé selon la revendication 4, **caractérisé en ce que** X représente H et Z représente H, le groupe méthyle, éthyle, n-propyle, isopropyle, n-butyle, isobutyle, tert-butyle, hydroxyéthyle ou hydroxypropyle.

**6.** Procédé selon la revendication 4 ou 5, **caractérisé en ce que**, dans le stade 1 du procédé, on fait réagir dans une étape 1 le composant C avec le composant E en présence d'un amorceur de radicaux, pour aboutir à un acide alkylphosphoneux, et dans l'étape 2 on estérifie par un alcool la solution réactionnelle résultante et on sépare par distillation l'ester d'acide phosphoneux résultant et ensuite, dans une étape 3, on fait réagir ce dernier avec le composant D, en présence d'un amorceur de radicaux ou d'un amorceur basique, et à la suite de cela on effectue le stade 2 du procédé.

**7.** Procédé selon la revendication 6, **caractérisé en ce que**, dans l'étape 2, l'acide alkylphosphoneux est estérifié directement par un alcool linéaire ou ramifié de formule générale M-OH, M représentant un radical alkyle linéaire

ou ramifié ayant de 1 à 10 atomes de carbone.

**8.** Procédé selon la revendication 7, **caractérisé en ce que** l'alcool consiste en n-butanol, isobutanol ou éthylhexanol.

**9.** Procédé selon une ou plusieurs des revendications 6 à 8, **caractérisé en ce que** le composant C consiste en le sel de sodium ou d'ammonium de l'acide hypophosphoreux.

**10.** Procédé selon une ou plusieurs des revendications 4 à 9, **caractérisé en ce que** l'amorceur consiste en un amorceur radicalaire, anionique, cationique ou photochimique.

**11.** Procédé selon une ou plusieurs des revendications 4 à 10, **caractérisé en ce que** l'amorceur consiste en des composés formant des peroxydes et/ou des composés peroxo tels que le peroxyde d'hydrogène, le peroxyde de sodium, le peroxyde de lithium, le persulfate de potassium, le persulfate de sodium, le persulfate d'ammonium, le peroxodisulfate de sodium, le peroxoborate de potassium, l'acide peracétique, le peroxyde de benzoyle, le peroxyde de di-tert-butyle et/ou l'acide peroxodisulfurique et/ou de composés azo tels que l'azodiisobutyronitrile, le dichlorhydrate de 2,2'-azobis(2-amidinopropane) et/ou le dichlorhydrate de 2,2'-azobis(N,N'-diméthylène-isobutyramidine).

**12.** Procédé selon une ou plusieurs des revendications 4 à 11**, caractérisé en ce que** les acides carboxyliques α,β-insaturés et les dérivés d'acides carboxyliques α,β-insaturés consistent en l'acide acrylique, l'acrylate de méthyle, l'acrylate d'éthyle, l'acide méthacrylique, l'acrylate d'hydroxyéthyle, l'acide crotonique, le crotonate d'éthyle, l'acide tiglique (acide *trans*-2,3-diméthylacrylique), l'acide (*trans*-)-2-penténoïque, l'acide furanne-2-carboxylique et/ou l'acide thiophène-2-carboxylique.

**13.** Procédé selon une ou plusieurs des revendications 4 à 12**, caractérisé en ce que** l'oléfine (composant E) consiste en l'éthylène, le propylène ou des mélanges quelconques de ceux-ci, le 1-hexène, le 1-heptène et/ou le 1-octène ou l'alcool allylique, l'allylamine, l'allyl-benzène, l'allylanisole, le styrène, l'α-méthylstyrène, le 4-méthylstyrène et/ou l'acétate de vinyle.

**14.** Procédé selon une ou plusieurs des revendications 4 à 13, **caractérisé en ce que** la réaction du composant C avec le composant D et/ou le composant E s'effectue de préférence à une température de 50 à 150 °C.

**15.** Procédé pour la préparation de mélanges selon une ou plusieurs des revendications 1 à 3, **caractérisé en ce que** dans le stade 1 du procédé on fait réagir le composant C dans une étape 1 avec une cétone pour obtenir un phosphinate de 1-hydroxy-1-dialkyle, on fait réagir ce phosphinate de 1-hydroxy-1-dialkyle dans une étape 2 avec le composant D en présence d'un amorceur de radicaux, puis, dans une étape 3, on sépare la cétone et, dans une étape 4, on fait réagir le mélange réactionnel résultant avec le composant E en présence d'un amorceur de radicaux, et on effectue ensuite le stade 2 du procédé.

**16.** Procédé pour la préparation de mélanges selon une ou plusieurs des revendications 1 à 3, **caractérisé en ce que** dans le stade 1 du procédé on fait réagir le composant C avec une cétone, dans une étape 1, pour obtenir un phosphinate de 1-hydroxy-1-dialkyle, dans une étape 2 on fait réagir ce phosphinate de 1-hydroxy-1-dialkyle avec le composant E en présence d'un amorceur de radicaux, puis on sépare la cétone dans une étape 3 et, dans une étape 4, on fait réagir le mélange réactionnel résultant avec le composant D en présence d'un amorceur de radicaux, et ensuite on effectue le stade 2 du procédé.

**17.** Procédé selon une ou plusieurs des revendications 4 à 16, **caractérisé en ce que** les composés métalliques du stade 2 du procédé consistent en l'hydroxyde d'aluminium, des sulfates d'aluminium, le sulfate de zinc heptahydraté, le chlorure de magnésium hexahydraté et/ou le chlorure de calcium dihydraté.

**18.** Procédé selon une ou plusieurs des revendications 4 à 17, **caractérisé en ce que** dans le stade 2 du procédé la réaction s'effectue à une température de 20 à 150 °C.

**19.** Utilisation des mélanges selon une ou plusieurs des revendications 1 à 3, en tant qu'agents ignifuges, pour la préparation d'agents ignifuges, dans des matières à mouler ignifugées ou dans des corps moulés, films, fils et fibres en polymère, ignifugés.

**20.** Utilisation selon la revendication 19, **caractérisée en ce que** la matière à mouler ignifugée ou les corps moulés,

films, fils et fibres en polymère, ignifugés, contiennent de préférence de 1 à 50 % en poids des mélanges selon une ou plusieurs des revendications 1 à 3, de 1 à 99 % en poids de polymère ou de mélanges de tels polymères, de 0 à 60 % d'additifs et de 0 à 60 % en poids de charge, la somme des composants étant toujours égale à 100 % en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6753363 A
- DE 2528420 A
- JP 5194562 A


### In der Beschreibung aufgeführte Nicht-Patentliteratur


- **V. K. KHAJRULLIN ; F. M. KONDRAT'EVA ; A. N. PUDOVIK.** *Z. obsc. Chim.,* 1968, vol. 38, 291-294
- **KURDYUMOVA, N. R. ; ROZHKO, L. F. ; RAGULIN, V. V. ; TSVETKOV, E. N.** *Russian Journal of General Chemistry,* 1997, vol. 67 (12